# EUROPEAN PATENT SPECIFICATION

(11) **EP 3 986 696 B1**
(45) Date of publication and mention of the grant of the patent: **29.10.2025**
(21) Application number: 19945655.9
(22) Date of filing: 19.09.2019
(51) Int. Cl.: B29C 64/165, B33Y 70/00, B33Y 10/00, B33Y 70/10, C09D 127/18

(54) **THREE-DIMENSIONAL PRINTING**
DREIDIMENSIONALES DRUCKEN
IMPRESSION TRIDIMENSIONNELLE

(43) Date of publication of application: 27.04.2022
(73) Proprietor: Peridot Print LLC, Palo Alto, CA 94304 (US)
(72) Inventor: NEGRI JIMENEZ, Graciela E., San Diego, California 92127-1899 (US); WOODRUFF, Shannon Reuben, San Diego, California 92127-1899 (US); DISCEKICI, Emre Hiro, San Diego, California 92127-1899 (US)
(74) Representative: Haseltine Lake Kempner LLP
(86) International application number: PCT/US2019/051899
(87) International publication number: WO 2021/054960

(56) References cited:
- EP-B1- 2 145 916
- WO-A1-2018/080456
- WO-A1-2018/122734
- WO-A1-2019/108200

## Description

### BACKGROUND

Three-dimensional (3D) printing may be an additive printing process used to make three-dimensional solid parts from a digital model. 3D printing is often used in rapid product prototyping, mold generation, mold master generation, and short run manufacturing. Some 3D printing techniques are considered additive processes because they involve the application of successive layers of material (which, in some examples, may include build material, binder and/or other printing liquid(s), or combinations thereof). This is unlike traditional machining processes, which often rely upon the removal of material to create the final part. Some 3D printing methods use chemical binders or adhesives to bind build materials together. Other 3D printing methods involve at least partial coalescence of the build material, and the mechanism for material coalescence (e.g., curing, thermal merging/fusing, melting, sintering, etc.) may depend upon the type of build material used. For some materials, at least partial coalescence may be accomplished using heat-assisted extrusion, and for some other materials (e.g., polymerizable materials), curing or fusing may be accomplished using, for example, ultra-violet light or infrared light.

The document WO 2019/108200 A1 discloses examples of three-dimensional printing that may utilize a fusing agent to pattern polymeric build material or polymeric composite build material. In these examples, an entire layer of the polymeric or polymeric composite build material is exposed to radiation, but the patterned region (which, in some instances, is less than the entire layer) of the polymeric or polymeric composite build material is fused and hardened to become a layer of a 3D object.

The document WO 2018/080456 A1 discloses a method comprising selectively applying a core fusing agent on at least a portion of a build material; exposing the build material to electromagnetic radiation, thereby fusing the portion of the build material in contact with the core fusing agent to form a core layer; applying a layer of the build material on the core layer; applying a primer fusing agent on at least a portion of the build material layer, the primer fusing agent including a plasmonic resonance absorber having absorption at wavelengths ranging from 800 nm to 4000 nm and having transparency at wavelengths ranging from 400 nm to 780 nm.

### BRIEF DESCRIPTION OF THE DRAWINGS

Features of examples of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.
Fig. 1 is a flow diagram depicting an example of a 3D printing method;
Fig. 2 is a schematic illustration of one example of the 3D printing method of Fig. 1;
Fig. 3 is a schematic illustration of another example of a 3D printing method;
Fig. 4 is a cross-sectional view of an example 3D object;
Fig. 5 is a cross-sectional view of another example of a 3D object;
Fig. 6 is a flow diagram depicting yet another example of a 3D printing method; and
Fig. 7A through Fig. 7C are black and white reproductions of originally colored photographs depicting example and comparative example 3D printed objects at different times during a deionized water droplet test.

### DETAILED DESCRIPTION

The surface properties of three-dimensionally printed objects are generally dictated by the properties of the bulk build material that is used. For example, 3D printed objects generated with polyamide-6,6 are more hydrophilic than 3D printed objects generated with, e.g., polypropylene or polyamide-12. However, manufacturing processes can lead to physical characteristics (e.g., porosity), which allow for surface wetting and water permeation, even in 3D printed objects printed with relatively hydrophobic bulk build materials. In the examples disclosed herein, a hydrophobic agent may be used to generate 3D printed parts with tailored surface hydrophobicity, which may be vastly different from the intrinsic property of the bulk build material that is used. This is due to the fact that the hydrophobic agent is selectively jetted on the build material during the printing process, as well as on the exterior surfaces on the 3D printed objects. The ability to jet the hydrophobic agent via any suitable inkjet printing technique enables controlled (and potentially varying) hydrophobicity to be spatially incorporated into the periphery of 3D printed objects at the voxel level.

Still further, the hydrophobic agent disclosed herein alters the water repellency property of the bulk build material without significant chemical modification to the bulk build material.

The introduction of selective surface hydrophobicity to 3D printed objects can help to maintain surfaces that are clean and/or dry. In some applications, clean and/or dry surfaces can also help to prevent ice formation, reduce rust formation, and increase protection of electrical systems.

Throughout this disclosure, a weight percentage that is referred to as "wt% active" refers to the loading of an active component of a dispersion or other formulation that is present, e.g., in the hydrophobicagent, fusing agent, detailing agent, etc. For example, an energy absorber, such as carbon black, may be present in a water-based formulation (e.g., a stock solution or dispersion) before being incorporated into the fusing agent vehicle. In this example, the wt% actives of the carbon black accounts for the loading (as a weight percent) of the carbon black solids that are present in the fusing agent, and does not account for the weight of the other components (e.g., water, etc.) that are present in the stock solution or dispersion with the carbon black. The term "wt%," without the term actives, refers to either i) the loading (in the hydrophobicagent, fusing agent, etc.) of a 100% active component that does not include other non-active components therein, or ii) the loading (in the hydrophobicagent, fusing agent, etc.) of a material or component that is used "as is" and thus the wt% accounts for both active and non-active components.

### 3D Printing Fluid Kits, 3D Printing Kits, and 3D Printing Compositions

The examples disclosed herein include fluid kits for three-dimensional (3D) printing, three-dimensional (3D) printing kits, and three-dimensional (3D) printing compositions.

A multi-fluid kit according to the invention includes a hydrophobic agent including a perfluorinated polymer having a mean particle size ranging from about 50 nm to about 195 nm; a core fusing agent including an energy absorber having absorption at wavelengths ranging from 400 nm to 4000 nm; and a primer fusing agent including a plasmonic resonance absorber having absorption at wavelengths ranging from 800 nm to 4000 nm and having transparency at wavelengths ranging from 400 nm to 780 nm. Some examples of the multi-fluid kit further include a detailing agent. Other examples of the multi-fluid kit further include a coloring agent. Still other examples of the multi-fluid further include both a detailing agent and a coloring agent.

Any example of the multi-fluid kit may also be part of a 3D printing kit and/or composition. In addition to the fluids of the multi-fluid kit, the 3D printing kit also includes a build material composition.

It is to be understood that the components of the fluid kits and/or of the 3D printing kits may be maintained separately until used together in examples of the 3D printing method disclosed herein.

As used herein, it is to be understood that the terms "material set" or "kit" may, in some instances, be synonymous with "composition." Further, "material set" and "kit" are understood to be compositions comprising one or more components where the different components in the compositions are each contained in one or more containers, separately or in any combination, prior to and during printing but these components can be combined together during printing. The containers can be any type of a vessel, box, or receptacle made of any material.

As mentioned above, various agents may be included in the fluid kits and/or 3D printing kits disclosed herein. Example compositions of the hydrophobic agent, the fusing agents, the detailing agent, the coloring agent, and the build material composition will now be described.

### Hydrophobic Agent

In the examples disclosed herein, the hydrophobic agent includes a vehicle and a perfluorinated polymer dispersed in the vehicle.

The perfluorinated polymer may be any perfluorinated polymer capable of being 3D printed. When used in combination with the fusing agent disclosed herein, it has been found that the perfluorinated polymer can effectively intermingle with the build material particles, without inhibiting the function of the energy absorber in the fusing agent. The perfluorinated polymer becomes embedded in the coalesced build material, which results in a 3D printed layer having controlled hydrophobic portions.

In an example, the perfluorinated polymer has a mean particle size ranging from about 50 nm to about 195 nm. The term "mean particle size", as used herein, refers to the diameter of a spherical particle, or the average diameter of a non-spherical particle (i.e., the average of multiple diameters across the particle), or the volume-weighted mean diameter of a particle distribution.

In some examples, the perfluorinated polymer is selected from the group consisting of a perfluoroalkoxy alkane, poly(tetrafluoroethylene), a perfluorinated polyether, fluorinated ethylene propylene, and combinations thereof. Examples of a perfluoroalkoxy alkane have a chemical structure of: 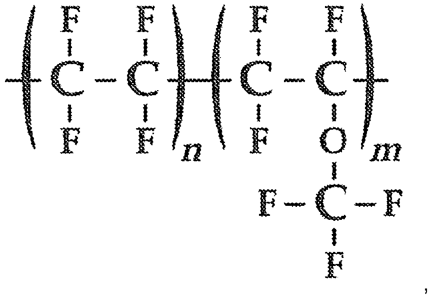 where n is greater than 5 and less than 100,000 and m is greater than 5 and less than 100,000. Examples of poly(tetrafluoroethylene) have a chemical structure of: 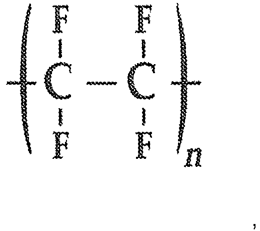 where n is greater than 5 and less than 100,000. An example of poly(tetrafluoroethylene) includes TEFLON^{®} (available from E. I. du Pont de Nemours and Company). Examples of a perfluorinated polyether have a chemical structure of: 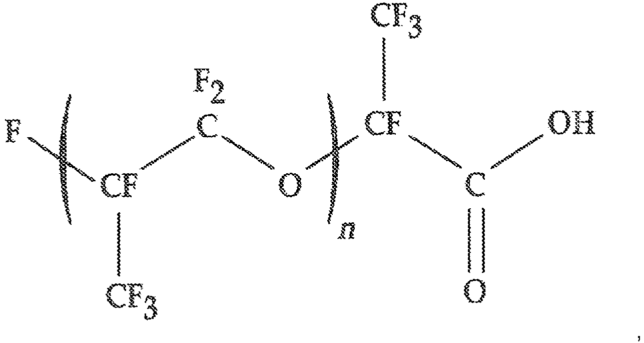 where n is greater than 5 and less than 100,000. In some examples of the perfluorinated polyether, n ranges from 10 to 60. Examples of a perfluorinated polyether include KRYTOX^{™} lubricants (available from The Chemours Company). Examples of fluorinated ethylene propylene have a chemical structure of: 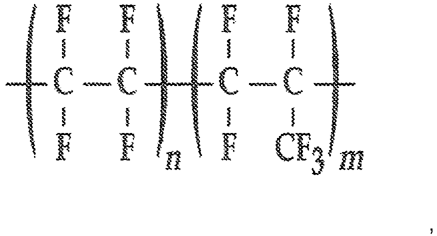 where n is greater than 5 and less than 100,000 and m is greater than 5 and less than 100,000.

In an example, the perfluorinated polymer is included in the hydrophobic agent in an amount ranging from about 2 wt% active to about 30 wt% active, based on the total weight of the hydrophobic agent. In another example, the perfluorinated polymer is included in the hydrophobic agent in an amount ranging from about 3 wt% active to about 10 wt% active, based on the total weight of the hydrophobic agent.

As mentioned above, the hydrophobic agent also includes the vehicle. As used herein, "vehicle" may refer to the liquid in which the perfluorinated polymer is dispersed to form the hydrophobic agent. In some examples, the vehicle includes a co-solvent, a surfactant, a humectant, and water. The vehicle may also include additional components, such as anti-kogation agent(s), antimicrobial agent(s), chelating agent(s), and/or buffer(s). In other examples, the vehicle consists of a co-solvent, a surfactant, a humectant, and water without any other components.

Water may make up the balance of the hydrophobic agent. As such, the amount of water may vary depending upon the amounts of the other components that are included. As an example, deionized water may be used.

The vehicle may also include co-solvent(s). Classes of organic co-solvents that may be used in the hydrophobic agent include aliphatic alcohols, aromatic alcohols, diols, glycol ethers, polyglycol ethers, lactams, formamides (substituted and unsubstituted), acetamides (substituted and unsubstituted), glycols, and long chain alcohols. Examples of these co-solvents include primary aliphatic alcohols, secondary aliphatic alcohols, 1,2-alcohols, 1,3-alcohols, 1,5-alcohols, 1,6-hexanediol or other diols (e.g., 1,5-pentanediol, 2-methyl-1,3-propanediol, etc.), ethylene glycol alkyl ethers, propylene glycol alkyl ethers, higher homologs (C₆-C₁₂) of polyethylene glycol alkyl ethers, triethylene glycol, tetraethylene glycol, tripropylene glycol methyl ether, N-alkyl caprolactams, unsubstituted caprolactams, 2-pyrrolidone, 1-methyl-2-pyrrolidone, 1-(2-hydroxyethyl)-2-pyrrolidone, 2-methyl-1,3-propanediol, and the like. Other examples of organic co-solvents include dimethyl sulfoxide (DMSO), isopropyl alcohol, ethanol, pentanol, acetone, or the like.

In an example, the total amount of the co-solvent(s) present in the hydrophobic agent ranges from about 1 wt% to about 20 wt%, based on the total weight of the hydrophobic agent. In an example, the hydrophobic agent include from about 10 wt% to about 20 wt%, or from about 5 wt% to about 18 wt% of the co-solvent(s).

The vehicle may include surfactant(s) to improve the jettability of the hydrophobic agent. In an example, the vehicle includes a blend of surfactants.

In some examples, the blend includes different non-ionic surfactants. For example, the surfactants include a first non-ionic surfactant having a first hydrophilic chain length; a second non-ionic surfactant having a second hydrophilic chain length that is different than the first hydrophilic chain length; a third non-ionic surfactant having a third hydrophilic chain length that is different than the first and second hydrophilic chain lengths; and a fourth non-ionic surfactant, wherein the fourth non-ionic surfactant is selected from the group consisting of a polyether siloxane and an alkoxylated alcohol or other organic surfactant. In this example, any combination of surfactants may be used, as long as the chain lengths for the first, second, and third surfactants are different. The surfactants may be combinations of those from the TERGITOL^{™} series (from The Dow Chemical Company), the TRITON^{™} series (from The Dow Chemical Company), the SURFYNOL^{®} series (from Evonik), the CAPSTONE^{®} series (from E. I. du Pont de Nemours and Company), the BYK (from BYK Additives and Instruments), or the like. In one example, the first non-ionic surfactant may be TERGITOL^{™} 15-S-12 (available from The Dow Chemical Company), the second non-ionic surfactant may be TERGITOL^{™} TMN-6 (available from The Dow Chemical Company), the third non-ionic surfactant may be TERGITOL^{™} 15-S-30 (available from The Dow Chemical Company), and the fourth non-ionic surfactant is a polyether siloxane (e.g., TEGO^{®} Wet 270 or TEGO^{®} Wet 280, available from Evonik) or another organic surfactant (e.g., TEGO^{®} Wet 510 or DYNOL^{™} 810, 960, 360, etc. available from Evonik), such as an alkoxylated alcohol.

In other examples, the blend includes two different non-ionic surfactants and one anionic surfactant. For example, the surfactants include a first non-ionic surfactant having a first hydrophilic chain length; a second non-ionic surfactant selected from the group consisting of a polyether siloxane and an alkoxylated alcohol; and an anionic surfactant. More specifically, the first non-ionic surfactant may be TERGITOL^{™} TMN-6 (available from The Dow Chemical Company), the second non-ionic surfactant is a polyether siloxane (e.g., TEGO^{®} Wet 270 or TEGO^{®} Wet 280, available from Evonik) or another organic surfactant (e.g., TEGO^{®} Wet 510 or DYNOL^{™} 810, 960, 350, etc. available from Evonik), and the anionic surfactant may be alkyldiphenyloxide disulfonate (e.g., the DOWFAX^{™} series, such a 2A1, 3B2, 8390, C6L, C10L, and 30599).

As another example, the blend includes three different non-ionic surfactants and one anionic surfactant. For example, the surfactants include a first non-ionic surfactant having a first hydrophilic chain length; a second non-ionic surfactant having a second hydrophilic chain length that is different than the first hydrophilic chain length; a third non-ionic surfactant, wherein the third non-ionic surfactant is selected from the group consisting of a polyether siloxane and an alkoxylated alcohol; and an anionic surfactant. More specifically, the first non-ionic surfactant may be TERGITOL^{™} TMN-6 (available from The Dow Chemical Company), the second non-ionic surfactant may be TERGITOL^{™} 15-S-30 (which has a higher HLB number and a longer hydrophilic chain length than TERGITOL^{™} TMN-6), the third non-ionic surfactant is a polyether siloxane (e.g., TEGO^{®} Wet 270 or TEGO^{®} Wet 280, available from Evonik) or another organic surfactant (e.g., TEGO^{®} Wet 510 or DYNOL^{™} 810, 960, 350, etc. available from Evonik), and the anionic surfactant may be alkyldiphenyloxide disulfonate (e.g., the DOWFAX^{™} series, such a 2A1, 3B2, 8390, C6L, C10L, and 30599).

In any of the blend examples, the first non-ionic surfactant and the second non-ionic surfactant may also be selected from the IGEPAL^{®} series (available from Rhodia), the PLURONIC^{®} series (available from BASF Corp.), the TRITON^{™} series (available from The Dow Chemical Company), the ECOSURF^{™} EH series (available from The Dow Chemical Company), and the ECOSURF^{™} SA series (available from The Dow Chemical Company), as long as the two non-ionic surfactants have different hydrophilic chain lengths.

In other examples, the non-ionic surfactants of the surfactant blend may be replaced with other non-ionic surfactants, such as a self-emulsifiable, non-ionic wetting agent based on acetylenic diol chemistry (e.g., SURFYNOL^{®} SEF from Evonik), and/or an ethoxylated low-foam wetting agent (e.g., SURFYNOL^{®} 465, SURFYNOL^{®} 440 or SURFYNOL^{®} CT-111 from Evonik), and/or an ethoxylated wetting agent and molecular defoamer (e.g., SURFYNOL^{®} 420 from Evonik). Still other suitable non-ionic surfactants include non-ionic wetting agents and molecular defoamers (e.g., SURFYNOL^{®} 104E from Evonik) or water-soluble, non-ionic surfactants (e.g., TERGITOL^{™} TMN-6, TERGITOL^{™} 15-S-7, TERGITOL^{™} 15-S-9, or TERGITOL^{™} 15-S-30 (a secondary alcohol ethoxylate) from The Dow Chemical Company). Another suitable non-ionic surfactant is an alkoxylated alcohol, such as TEGO^{®} Wet 510 available from Evonik.

In still other examples, the surfactant may be a fluorosurfactant. As an example, a non-ionic fluorosurfactant (e.g., CAPSTONE^{®} fluorosurfactants, such as CAPSTONE^{®} FS-35, from E. I. du Pont de Nemours and Company, previously known as ZONYL FSO) may be used.

In an example, the total amount of the surfactant(s) present in the hydrophobic agent ranges from about 0.25 wt% active to about 3 wt% active, based on the total weight of the hydrophobic agent. A balance of the non-ionic surfactants or the non-ionic surfactants and the anionic surfactant allows for better stabilization of all of the components and balance of the total surface tension of the hydrophobic agent. In some examples, the first non-ionic surfactant may be present in an amount ranging from about 0.1 wt% active to about 1 wt% active; the second non-ionic surfactant may be present in an amount ranging from about 0.1 wt% active to about 1 wt% active; the third non-ionic surfactant may be present in an amount ranging from about 0.1 wt% active to about 1 wt% active; the fourth non-ionic surfactant may be present in an amount ranging from about 0.1 wt% active to about 1 wt% active; and/or the anionic surfactant may be present in an amount ranging from about 0.1 wt% active to about 1 wt% active (based on the total weight of the hydrophobic agent).

The vehicle of the hydrophobic agent may also include humectant(s). An example of a suitable humectant is ethoxylated glycerin having the following formula: 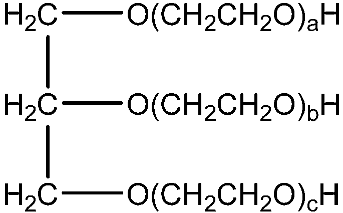 in which the total of a+b+c ranges from about 5 to about 60, or in other examples, from about 20 to about 30. An example of the ethoxylated glycerin is LIPONIC^{®} EG-1 (LEG-1, glycereth-26, a+b+c=26, available from Lipo Chemicals).

In an example, the total amount of the humectant(s) present in the hydrophobic agent ranges from about 3 wt% active to about 10 wt% active, based on the total weight of the hydrophobic agent.

An anti-kogation agent may be included in the hydrophobic agent that is to be jetted using thermal inkjet printing. Kogation refers to the deposit of dried printing liquid (e.g., hydrophobic agent) on a heating element of a thermal inkjet printhead. Anti-kogation agent(s) is/are included to assist in preventing the buildup of kogation. Examples of suitable anti-kogation agents include oleth-3-phosphate (e.g., commercially available as CRODAFOS^{®} O3A or CRODAFOS^{®} N-3 acid from Croda), dextran 500k, CRODAFOS^{™} HCE (phosphate-ester from Croda Int.), CRODAFOS^{®} N10 (oleth-10-phosphate from Croda Int.), DISPERSOGEN^{®} LFH (polymeric dispersing agent with aromatic anchoring groups, acid form, anionic, from Clariant), or a combination of oleth-3-phosphate and a low molecular weight (e.g., < 5,000) acrylic acid polymer (e.g., commercially available as CARBOSPERSE^{™} K-7028 Polyacrylate from Lubrizol).

Whether a single anti-kogation agent is used or a combination of anti-kogation agents is used, the total amount of anti-kogation agent(s) in the hydrophobic agent may range from greater than 0.01 wt% active to about 1.5 wt% active based on the total weight of the hydrophobic agent. In other examples, the anti-kogation agent is included in an amount ranging from about 0.025 wt% active to about 0.60 wt% active, or from about 0.25 wt% active to about 0.5 wt% active.

The vehicle of the hydrophobic agent may also include antimicrobial agent(s). Suitable antimicrobial agents include biocides and fungicides. Example antimicrobial agents may include the NUOSEPT^{™} (Troy Corp.), UCARCIDE^{™} (The Dow Chemical Company), ACTICIDE^{®} B20 (Thor Chemicals), ACTICIDE^{®} M20 (Thor Chemicals), ACTICIDE^{®} MBL (blends of 2-methyl-4-isothiazolin-3-one (MIT), 1,2-benzisothiazolin-3-one (BIT) and Bronopol) (Thor Chemicals), AXIDE^{™} (Planet Chemical), NIPACIDE^{™} (Clariant), blends of 5-chloro-2-methyl-4-isothiazolin-3-one (CIT or CMIT) and MIT under the tradename KATHON^{™} (The Dow Chemical Company), and combinations thereof. Examples of suitable biocides include an aqueous solution of 1,2-benzisothiazolin-3-one (e.g., PROXEL^{®} GXL from Arch Chemicals, Inc.), quaternary ammonium compounds (e.g., BARDAC^{®} 2250 and 2280, BARQUAT^{®} 50-65B, and CARBOQUAT^{®} 250-T, all from Lonza Ltd. Corp.), and an aqueous solution of methylisothiazolone (e.g., KORDEK^{®} MLX from The Dow Chemical Company).

In an example, the hydrophobic agent may include a total amount of antimicrobial agents that ranges from about 0.0001 wt% active to about 1 wt% active. In an example, the antimicrobial agent(s) is/are a biocide(s) and is/are present in the hydrophobic agent in an amount ranging from about 0.25 wt% active to about 0.35 wt% active (based on the total weight of the hydrophobic agent).

Chelating agents (or sequestering agents) may be included in the vehicle of the hydrophobic agent to eliminate the deleterious effects of heavy metal impurities. Examples of chelating agents include disodium ethylenediaminetetraacetic acid (EDTA-Na), ethylene diamine tetra acetic acid (EDTA), and methylglycinediacetic acid (e.g., TRILON^{®} M from BASF Corp.).

Whether a single chelating agent is used or a combination of chelating agents is used, the total amount of chelating agent(s) in the hydrophobic agent may range from greater than 0 wt% active to about 2 wt% active based on the total weight of the hydrophobic agent. In an example, the chelating agent(s) is/are present in the hydrophobic agent in an amount of about 0.05 wt% active (based on the total weight of the hydrophobic agent).

In an example, the hydrophobic agent has a surface tension ranging from about 20 dynes/cm to about 40 dynes/cm. One dyne is equal to 10⁻⁵ N. In other examples, the surface tension ranges from about 29 dynes/cm to about 40 dynes/cm or from about 31 dynes/cm to about 36 dynes/cm. A surface tension within this range is desirable, as it may allow the hydrophobic agent (and thus, the perfluorinated polymer) to penetrate an entire layer of build material, which may allow the perfluorinated polymer to intermingle with all or substantially all of the build material particles in the portion of the layer that is to become hydrophobic.

The vehicle of the hydrophobic agent may also include a buffer to prevent undesirable changes in the pH. Examples of buffers include TRIS (tris(hydroxymethyl)aminomethane or TRIZMA^{®}), bis-tris propane, TES (2-[(2-Hydroxy-1,1-bis(hydroxymethyl)ethyl)amino]ethanesulfonic acid), MES (2-ethanesulfonic acid), MOPS (3-(N-morpholino)propanesulfonic acid), HEPES (4-(2-hydroxyethyl)-1-piperazineethanesulfonic acid), DIPSO (3-(N,N-Bis[2-hydroxyethyl]amino)-2-hydroxypropanesulfonic acid), Tricine (N-[tris(hydroxymethyl)methyl]glycine), HEPPSO (β-Hydroxy-4-(2-hydroxyethyl)-1-piperazinepropanesulfonic acid monohydrate), POPSO (Piperazine-1,4-bis(2-hydroxypropanesulfonic acid) dihydrate), EPPS (4-(2-Hydroxyethyl)-1-piperazinepropanesulfonic acid, 4-(2-Hydroxyethyl)piperazine-1-propanesulfonic acid), TEA (triethanolamine buffer solution), Gly-Gly (Diglycine), bicine (N,N-Bis(2-hydroxyethyl)glycine), HEPBS (N-(2-Hydroxyethyl)piperazine-N'-(4-butanesulfonic acid)), TAPS ([tris(hydroxymethyl)methylamino]propanesulfonic acid), AMPD (2-amino-2-methyl-1,3-propanediol), TABS (N-tris(Hydroxymethyl)methyl-4-aminobutanesulfonic acid), or the like.

Whether a buffer is used or a combination of buffers is used, the total amount of buffer(s) in the hydrophobic agent may range from greater than 0 wt% active to about 0.5 wt% active based on the total weight of the hydrophobic agent. In an example, the buffer(s) is/are present in the hydrophobic agent in an amount of about 0.1 wt% active (based on the total weight of the hydrophobic agent).

### Fusing Agents

The fluid kit(s) and/or 3D printing kit(s) disclosed herein include one or more fusing agents.

Some examples of the fusing agent have substantial absorption (e.g., 80%) at least in the visible region (400 nm - 780 nm). These examples of the fusing agent are referred to as the core fusing agent, or, in some instances, the black fusing agent. As described herein, the energy absorber (or active material) in the core fusing agent may also absorb energy in the infrared region (e.g., 800 nm to 4000 nm). This absorption generates heat suitable for coalescing/fusing the build material composition in contact therewith during 3D printing, which leads to 3D objects (or 3D objects regions) having mechanical integrity and relatively uniform mechanical properties (e.g., strength, elongation at break, etc.). This absorption, however, also results in strongly colored, e.g., black, 3D objects (or 3D objects regions).

Other examples of the fusing agent include an energy absorber having absorption at wavelengths ranging from 800 nm to 4000 nm and having transparency at wavelengths ranging from 400 nm to 780 nm. These examples of the fusing agent are referred to as the primer fusing agent, or, in some instances, the low tint fusing agent. This absorption and transparency allows the primer fusing agent to absorb enough radiation to coalesce/fuse the build material composition in contact therewith while enabling the 3D objects (or 3D objects regions) to be white or slightly colored.

Still other examples of the energy absorber absorb at least some of the wavelengths within the range of 400 nm to 4000 nm. Examples include glass fibers, titanium dioxide, clay, mica, talc, barium sulfate, calcium carbonate, phosphate pigments, and/or silicate pigments. These energy absorbers are often white or lightly colored and may be used in either the core fusing agent or the primer fusing agent.

Phosphates may have a variety of counterions, such as copper, zinc, iron, magnesium, calcium, strontium, the like, and combinations thereof. Examples of phosphates can include M₂P₂O₇,M₄P₂O₉, M₅P₂O₁₀, M₃(PO₄)₂, M(PO₃)₂, M₂P₄O₁₂, and combinations thereof, where M represents a counterion having an oxidation state of +2, such as those listed above or a combination thereof. For example, M₂P₂O₇ can include compounds such as Cu₂P₂O₇, Cu/MgP₂O₇, Cu/ZnP₂O₇, or any other suitable combination of counterions. Silicates can have the same or similar counterions as phosphates. Example silicates can include M₂SiO₄, M₂Si₂O₆, and other silicates where M is a counterion having an oxidation state of +2. For example, the silicate M₂Si₂O₆ can include Mg₂Si₂O₆, Mg/CaSi₂O₆, MgCuSi₂O₆, Cu₂Si₂O₆, Cu/ZnSi₂O₆, or other suitable combination of counterions. It is noted that the phosphates and silicates described herein are not limited to counterions having a +2 oxidation state, and that other counterions can also be used to prepare other suitable near-infrared pigments.

As used herein "absorption" means that at least 80% of radiation having wavelengths within the specified range is absorbed. Also used herein, "transparency" means that 25% or less of radiation having wavelengths within the specified range is absorbed.

### Core Fusing Agent

Some examples of the core fusing agent are dispersions including an energy absorber (i.e., an active material). In some examples, the active material may be an infrared light absorbing colorant. In an example, the active material is a near-infrared light absorbing colorant. Any near-infrared colorants, e.g., those produced by Fabricolor, Eastman Kodak, or BASF, Yamamoto, may be used in the core fusing agent. As one example, the core fusing agent may be a printing liquid formulation including carbon black as the active material. Examples of this printing liquid formulation are commercially known as CM997A, 516458, C18928, C93848, C93808, or the like, all of which are available from HP Inc.

As another example, the core fusing agent may be a printing liquid formulation including near-infrared absorbing dyes as the active material. Examples of this printing liquid formulation are described in U.S. Patent No. 9,133,344, incorporated herein by reference in its entirety. Some examples of the near-infrared absorbing dye are water-soluble near-infrared absorbing dyes selected from the group consisting of: 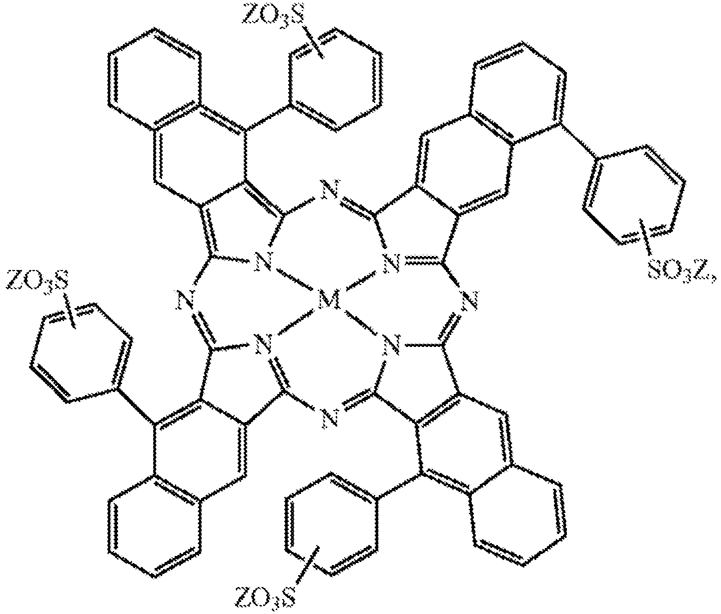 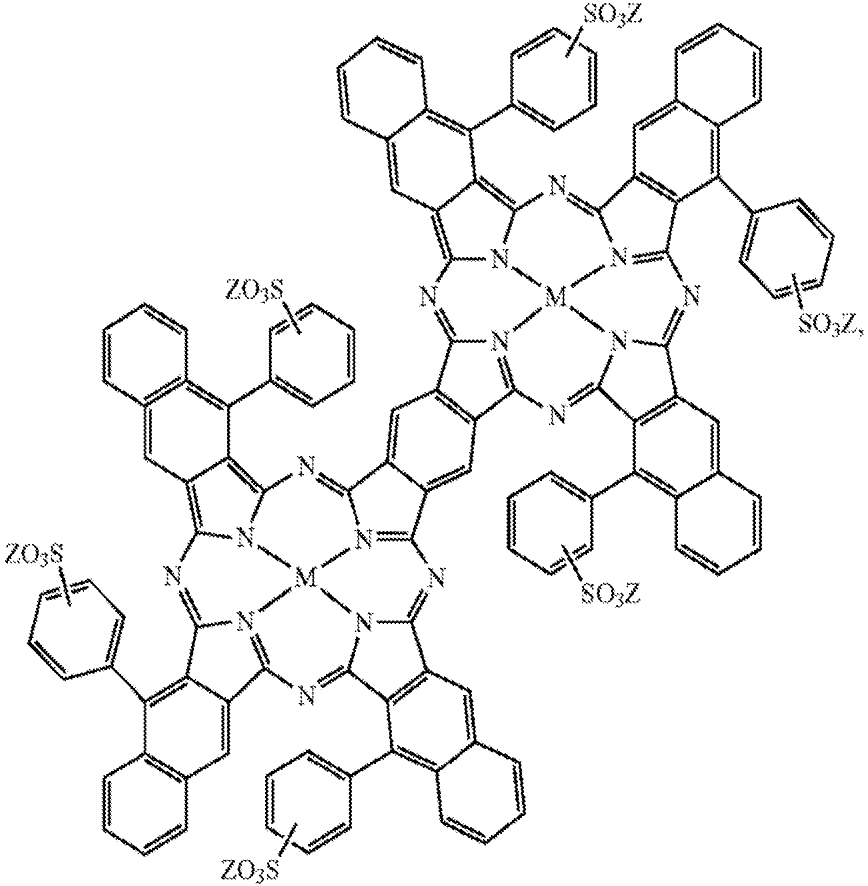 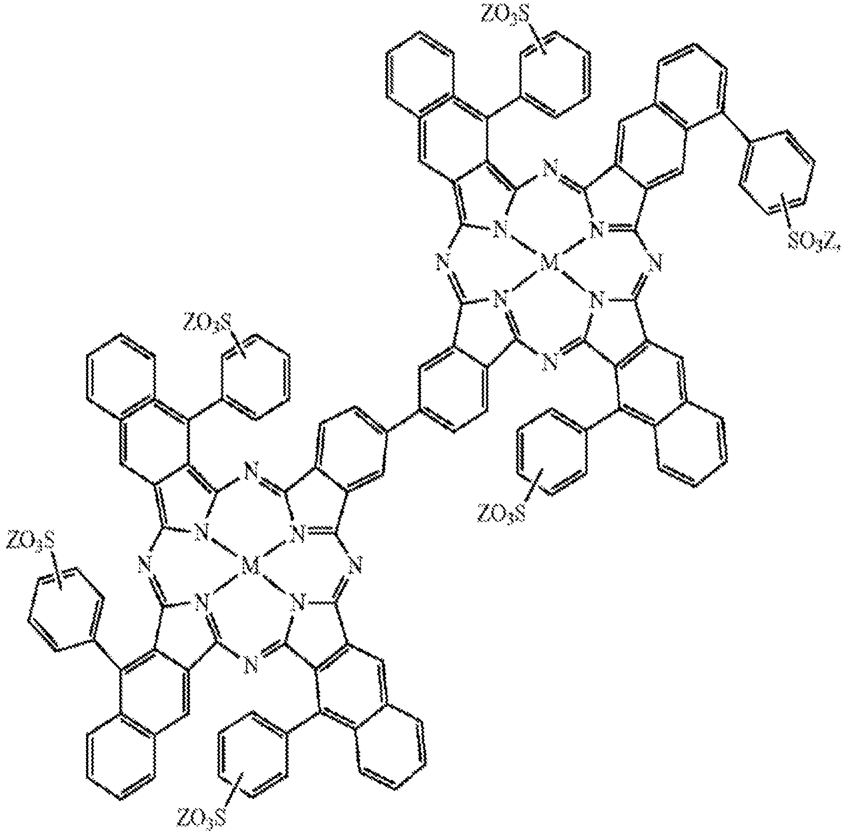 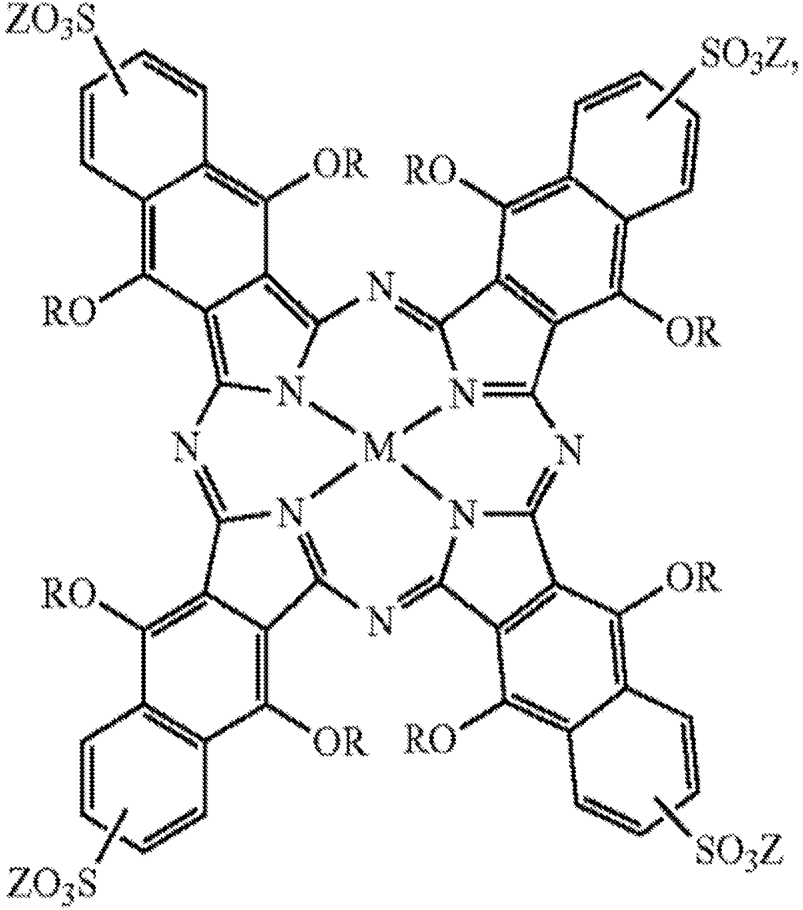 and mixtures thereof. In the above formulations, M can be a divalent metal atom (e.g., copper, etc.) or can have OSO₃Na axial groups filling any unfilled valencies if the metal is more than divalent (e.g., indium, etc.), R can be hydrogen or any C₁-C₈ alkyl group (including substituted alkyl and unsubstituted alkyl), and Z can be a counterion such that the overall charge of the near-infrared absorbing dye is neutral. For example, the counterion can be sodium, lithium, potassium, NH₄⁺, etc.

Some other examples of the near-infrared absorbing dye are hydrophobic near-infrared absorbing dyes selected from the group consisting of: 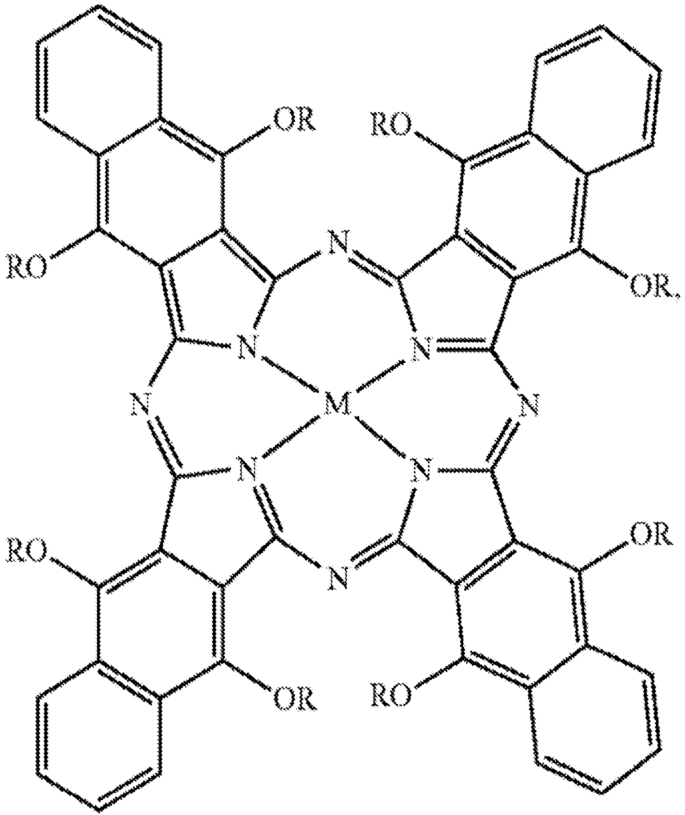 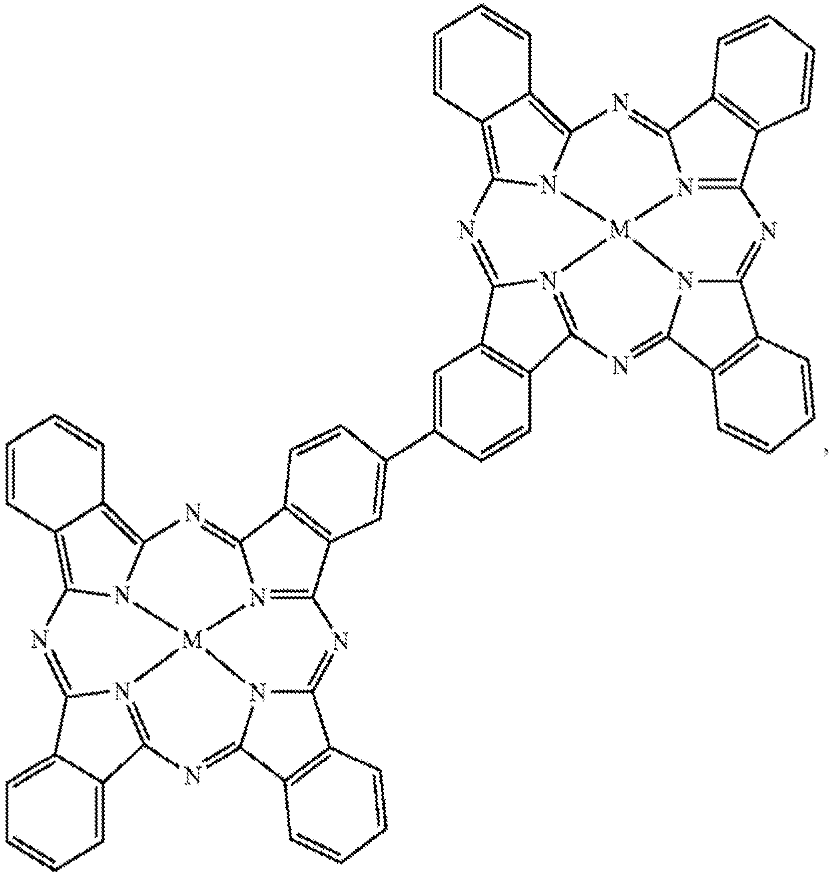 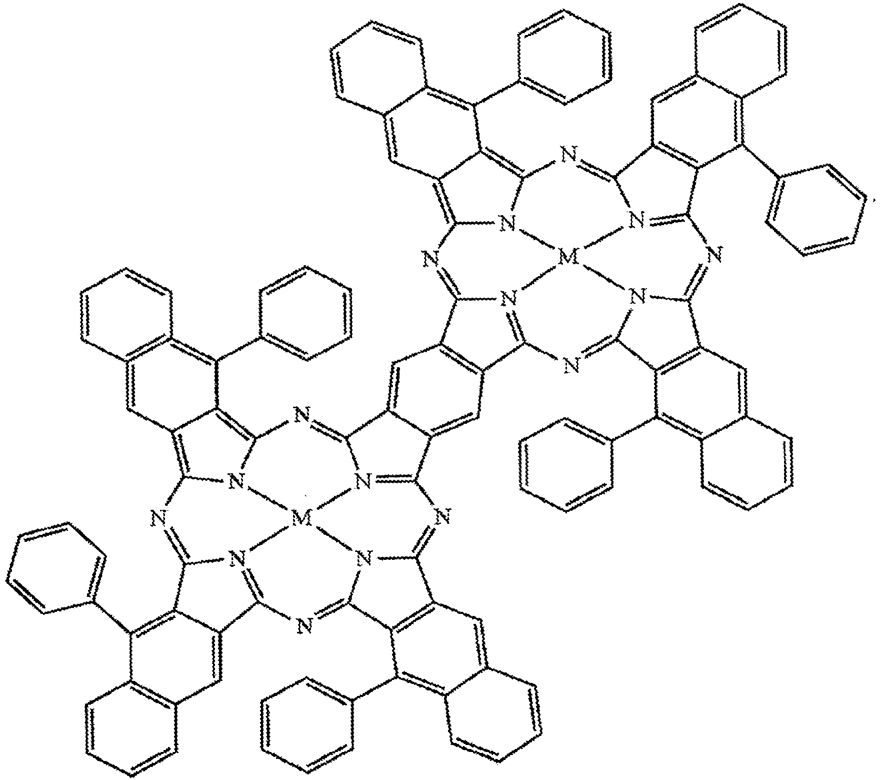 and mixtures thereof. For the hydrophobic near-infrared absorbing dyes, M can be a divalent metal atom (e.g., copper, etc.) or can include a metal that has Cl, Br, or OR' (R'=H, CH₃, COCH₃, COCH₂COOCH₃, COCH₂COCH₃) axial groups filling any unfilled valencies if the metal is more than divalent, and R can be hydrogen or any C₁-C₈ alkyl group (including substituted alkyl and unsubstituted alkyl).

Other near-infrared absorbing dyes or pigments may be used in the core fusing agent. Some examples include anthroquinone dyes or pigments, metal dithiolene dyes or pigments, cyanine dyes or pigments, perylenediimide dyes or pigments, croconium dyes or pigments, pyrilium or thiopyrilium dyes or pigments, boron-dipyrromethene dyes or pigments, or aza-boron-dipyrromethene dyes or pigments.

Anthroquinone dyes or pigments and metal (e.g., nickel) dithiolene dyes or pigments may have the following structures, respectively: 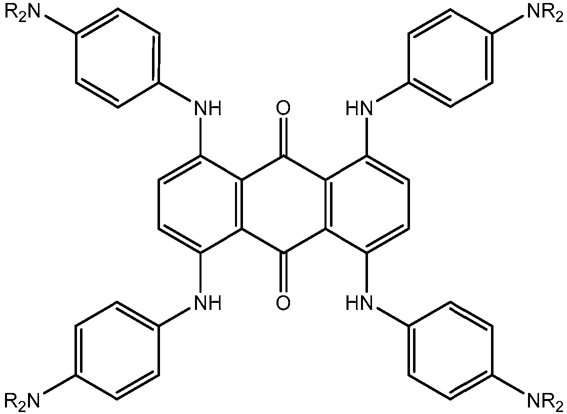 **Anthroquinone dyes/pigments** 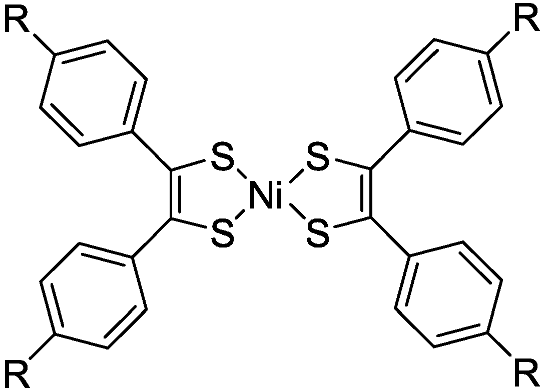 **Nickel Dithiolene dyes/pigments**
where R in the anthroquinone dyes or pigments may be hydrogen or any C₁-C₈ alkyl group (including substituted alkyl and unsubstituted alkyl), and R in the dithiolene may be hydrogen, COOH, SO₃, NH₂, any C₁-C₈ alkyl group (including substituted alkyl and unsubstituted alkyl), or the like.

Cyanine dyes or pigments and perylenediimide dyes or pigments may have the following structures, respectively: 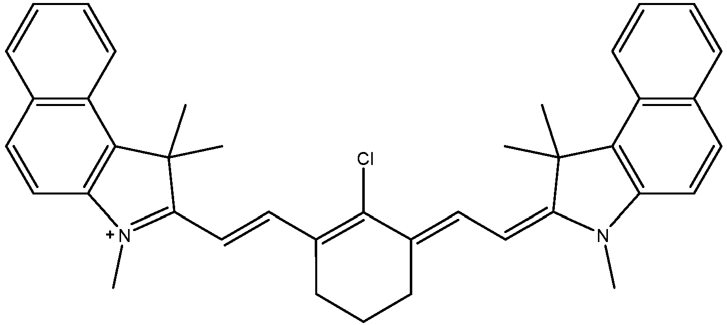 **Cyanine dyes/pigments** 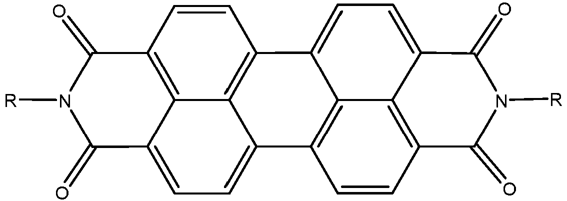 **Perylenediimide dyes/pigments**
where R in the perylenediimide dyes or pigments may be hydrogen or any C₁-C₈ alkyl group (including substituted alkyl and unsubstituted alkyl).

Croconium dyes or pigments and pyrilium or thiopyrilium dyes or pigments may have the following structures, respectively: 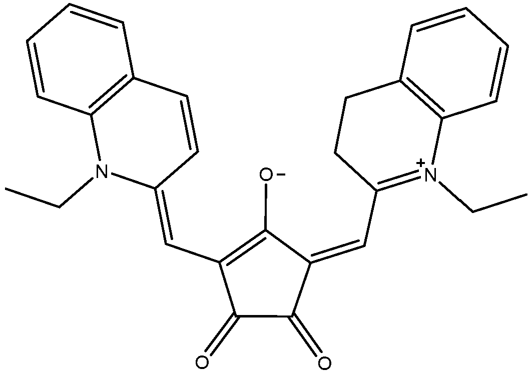 **Croconium dyes/pigments** 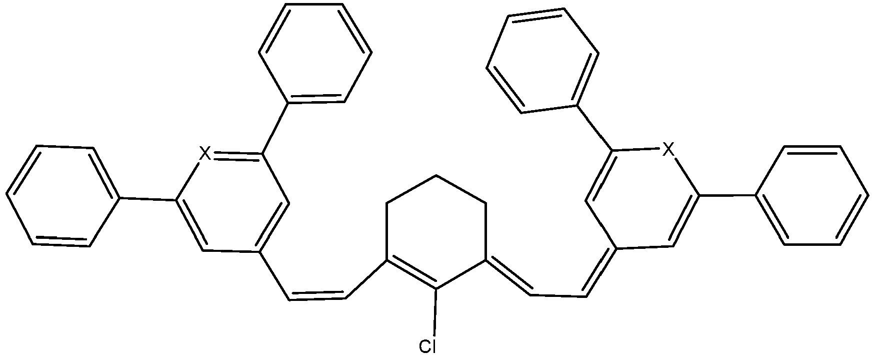 **Pyrilium (X=O), thiopyrilium (X=S) dyes/pigments**

Boron-dipyrromethene dyes or pigments and aza-boron-dipyrromethene dyes or pigments may have the following structures, respectively: 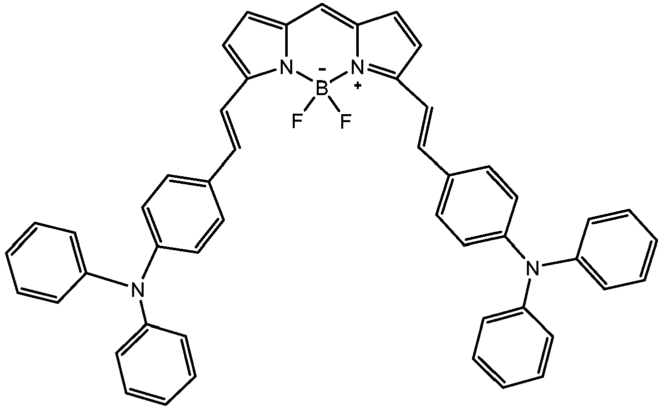 **boron-dipyrromethene dyes/pigments** 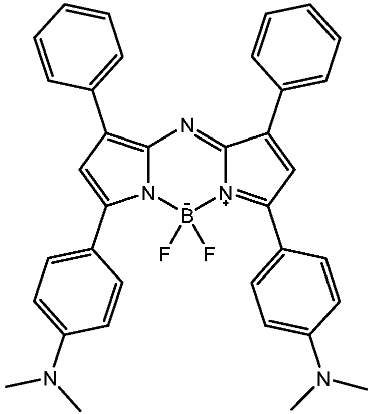 **aza-boron-dipyrromethene dyes/pigments**

Other suitable near-infrared absorbing dyes may include aminium dyes, tetraaryldiamine dyes, phthalocyanine dyes, and others.

Other near infrared absorbing materials include conjugated polymers (i.e., a polymer that has a backbone with alternating double and single bonds), such as poly(3,4-ethylenedioxythiophene)-poly(styrenesulfonate) (PEDOT:PSS), a polythiophene, poly(p-phenylene sulfide), a polyaniline, a poly(pyrrole), a poly(acetylene), poly(p-phenylene vinylene), polyparaphenylene, or combinations thereof.

The amount of the energy absorber/active material that is present in the core fusing agent ranges from greater than 0 wt% active to about 40 wt% active based on the total weight of the core fusing agent. In other examples, the amount of the active material in the core fusing agent ranges from about 0.3 wt% active to 30 wt% active, from about 1 wt% active to about 20 wt% active, from about 1.0 wt% active up to about 10.0 wt% active, or from greater than 4.0 wt% active up to about 15.0 wt% active. It is believed that these active material loadings provide a balance between the core fusing agent having jetting reliability and heat and/or radiation absorbance efficiency.

### Primer Fusing Agent

Some examples of the primer fusing agent are dispersions including the energy absorber that has absorption at wavelengths ranging from 800 nm to 4000 nm and transparency at wavelengths ranging from 400 nm to 780 nm. The absorption of this energy absorber is the result of plasmonic resonance effects. Electrons associated with the atoms of the energy absorber may be collectively excited by radiation, which results in collective oscillation of the electrons. The wavelengths that can excite and oscillate these electrons collectively are dependent on the number of electrons present in the energy absorber particles, which in turn is dependent on the size of the energy absorber particles. The amount of energy that can collectively oscillate the particle's electrons is low enough that very small particles (e.g., 1-100 nm) may absorb radiation with wavelengths several times (e.g., from 8 to 800 or more times) the size of the particles. The use of these particles allows the primer fusing agent to be inkjet jettable as well as electromagnetically selective (e.g., having absorption at wavelengths ranging from 800 nm to 4000 nm and transparency at wavelengths ranging from 400 nm to 780 nm).

In an example, the energy absorber of the primer fusing agent has an average particle diameter (e.g., volume-weighted mean diameter) ranging from greater than 0 nm to less than 220 nm. In another example, the energy absorber has an average particle diameter ranging from greater than 0 nm to 120 nm. In a still another example, the energy absorber has an average particle diameter ranging from about 10 nm to about 200 nm.

In an example, the energy absorber of the primer fusing agent is an inorganic pigment. Examples of suitable inorganic pigments include lanthanum hexaboride (LaB₆), tungsten bronzes (AₓWO₃), indium tin oxide (In₂O₃:SnO₂, ITO), antimony tin oxide (Sb₂O₃:SnO₂, ATO), titanium nitride (TiN), aluminum zinc oxide (AZO), ruthenium oxide (RuO₂), silver (Ag), gold (Au), platinum (Pt), iron pyroxenes (AₓFe_{y}Si₂O₆ wherein A is Ca or Mg, x = 1.5-1.9, and y = 0.1-0.5), modified iron phosphates (AₓFe_{y}PO₄), modified copper phosphates (AₓCu_{y}PO_{z}), and modified copper pyrophosphates (AₓCu_{y}P₂O₇). Tungsten bronzes may be alkali doped tungsten oxides. Examples of suitable alkali dopants (i.e., A in AₓWO₃) may be cesium, sodium, potassium, or rubidium. In an example, the alkali doped tungsten oxide may be doped in an amount ranging from greater than 0 mol% to about 0.33 mol% based on the total mol% of the alkali doped tungsten oxide. Suitable modified iron phosphates (AₓFe_{y}PO) may include copper iron phosphate (A = Cu, x = 0.1-0.5, and y = 0.5-0.9), magnesium iron phosphate (A = Mg, x = 0.1-0.5, and y = 0.5-0.9), and zinc iron phosphate (A = Zn, x = 0.1-0.5, and y = 0.5-0.9). For the modified iron phosphates, it is to be understood that the number of phosphates may change based on the charge balance with the cations. Suitable modified copper pyrophosphates (AₓCu_{y}P₂O₇) include iron copper pyrophosphate (A = Fe, x = 0-2, and y = 0-2), magnesium copper pyrophosphate (A = Mg, x = 0-2, and y = 0-2), and zinc copper pyrophosphate (A = Zn, x = 0-2, and y = 0-2). Combinations of the inorganic pigments may also be used.

The amount of the energy absorber that is present in the primer fusing agent ranges from greater than 0 wt% active to about 40 wt% active based on the total weight of the primer fusing agent. In other examples, the amount of the energy absorber in the primer fusing agent ranges from about 0.3 wt% active to 30 wt% active, from about 1 wt% active to about 20 wt% active, from about 1.0 wt% active up to about 10.0 wt% active, or from greater than 4.0 wt% active up to about 15.0 wt% active. It is believed that these energy absorber loadings provide a balance between the primer fusing agent having jetting reliability and heat and/or radiation absorbance efficiency.

The energy absorber of the primer fusing agent may, in some instances, be dispersed with a dispersant. As such, the dispersant helps to uniformly distribute the energy absorber throughout the primer fusing agent. Examples of suitable dispersants include polymer or small molecule dispersants, charged groups attached to the energy absorber surface, or other suitable dispersants. Some specific examples of suitable dispersants include a water-soluble acrylic acid polymer (e.g., CARBOSPERSE^{®} K7028 available from Lubrizol), water-soluble styrene-acrylic acid copolymers/resins (e.g., JONCRYL^{®} 296, JONCRYL^{®} 671, JONCRYL^{®} 678, JONCRYL^{®} 680, JONCRYL^{®} 683, JONCRYL^{®} 690, etc. available from BASF Corp.), a high molecular weight block copolymer with pigment affinic groups (e.g., DISPERBYK^{®}-190 available BYK Additives and Instruments), or water-soluble styrene-maleic anhydride copolymers/resins.

Whether a single dispersant is used or a combination of dispersants is used, the total amount of dispersant(s) in the primer fusing agent may range from about 10 wt% to about 200 wt% based on the weight of the energy absorber in the primer fusing agent.

A silane coupling agent may also be added to the primer fusing agent to help bond the organic (e.g., dispersant) and inorganic (e.g., pigment) materials. Examples of suitable silane coupling agents include the SILQUEST^{®} A series manufactured by Momentive.

Whether a single silane coupling agent is used or a combination of silane coupling agents is used, the total amount of silane coupling agent(s) in the primer fusing agent may range from about 0.1 wt% to about 50 wt% based on the weight of the energy absorber in the primer fusing agent. In an example, the total amount of silane coupling agent(s) in the primer fusing agent ranges from about 1 wt% to about 30 wt% based on the weight of the energy absorber. In another example, the total amount of silane coupling agent(s) in the primer fusing agent ranges from about 2.5 wt% to about 25 wt% based on the weight of the energy absorber.

One example of the primer fusing agent includes cesium tungsten oxide (CTO) nanoparticles as the energy absorber. The CTO nanoparticles have a formula of CsₓWO₃, where 0<x<1. The cesium tungsten oxide nanoparticles may give the primer fusing agent a light blue color. The strength of the color may depend, at least in part, on the amount of the CTO nanoparticles in the primer fusing agent. When it is desirable to form an outer white layer on the 3D object, less of the CTO nanoparticles may be used in the primer fusing agent in order to achieve the white color. In an example, the CTO nanoparticles may be present in the primer fusing agent in an amount ranging from about 1 wt% to about 20 wt% (based on the total weight of the primer fusing agent).

The average particle size (e.g., volume-weighted mean diameter) of the CTO nanoparticles may range from about 1 nm to about 40 nm. In some examples, the average particle size of the CTO nanoparticles may range from about 1 nm to about 15 nm or from about 1 nm to about 10 nm. The upper end of the particle size range (e.g., from about 30 nm to about 40 nm) may be less desirable, as these particles may be more difficult to stabilize.

This example of the primer fusing agent may also include a zwitterionic stabilizer. The zwitterionic stabilizer may improve the stabilization of this example of the primer fusing agent. While the zwitterionic stabilizer has an overall neutral charge, at least one area of the molecule has a positive charge (e.g., amino groups) and at least one other area of the molecule has a negative charge. The CTO nanoparticles may have a slight negative charge. The zwitterionic stabilizer molecules may orient around the slightly negative CTO nanoparticles with the positive area of the zwitterionic stabilizer molecules closest to the CTO nanoparticles and the negative area of the zwitterionic stabilizer molecules furthest away from the CTO nanoparticles. Then, the negative charge of the negative area of the zwitterionic stabilizer molecules may repel CTO nanoparticles from each other. The zwitterionic stabilizer molecules may form a protective layer around the CTO nanoparticles, and prevent them from coming into direct contact with each other and/or increase the distance between the particle surfaces (e.g., by a distance ranging from about 1 nm to about 2 nm). Thus, the zwitterionic stabilizer may prevent the CTO nanoparticles from agglomerating and/or settling in the primer fusing agent.

Examples of suitable zwitterionic stabilizers include C₂ to C₈ betaines, C₂ to C₈ aminocarboxylic acids having a solubility of at least 10 g in 100 g of water, taurine, and combinations thereof. Examples of the C₂ to C₈ aminocarboxylic acids include beta-alanine, gamma-aminobutyric acid, glycine, and combinations thereof.

The zwitterionic stabilizer may be present in the primer fusing agent in an amount ranging from about 2 wt% to about 35 wt% (based on the total weight of the primer fusing agent). When the zwitterionic stabilizer is the C₂ to C₈ betaine, the C₂ to C₈ betaine may be present in an amount ranging from about 8 wt% to about 35 wt% of the total weight of the primer fusing agent. When the zwitterionic stabilizer is the C₂ to C₈ aminocarboxylic acid, the C₂ to C₈ aminocarboxylic acid may be present in an amount ranging from about 2 wt% to about 20 wt% of the total weight of the primer fusing agent. When the zwitterionic stabilizer is taurine, taurine may be present in an amount ranging from about 2 wt% to about 35 wt% of the total weight of the primer fusing agent.

In this example, the weight ratio of the CTO nanoparticles to the zwitterionic stabilizer may range from 1:10 to 10:1; or the weight ratio of the CTO nanoparticles to the zwitterionic stabilizer may be 1:1.

### Vehicle for Fusing Agents

Any example of the fusing agent (core or primer fusing agent) includes a liquid vehicle. The fusing agent vehicle, or "FA vehicle," may refer to the liquid in which the energy absorber is/are dispersed or dissolved to form the respective fusing agent. A wide variety of FA vehicles, including aqueous and non-aqueous vehicles, may be used in the fusing agents. In some examples, the FA vehicle may include water alone or a non-aqueous solvent alone with no other components. In other examples, the FA vehicle may include other components, depending, in part, upon the applicator that is to be used to dispense the fusing agent. Examples of other suitable fusing agent components include co-solvent(s), humectant(s), surfactant(s), antimicrobial agent(s), anti-kogation agent(s), and/or chelating agent(s).

It is to be understood that any of the include co-solvent(s), surfactant(s), humectant(s), anti-kogation agent(s), antimicrobial agent(s), and/or chelating agent(s) described herein for the hydrophobic agent may be used in any examples of the fusing agent in any of the amounts provided, except that the percentages will be with respect to the total weight of the fusing agent.

It is to be further understood that specific blends of surfactants may or may not be included in the fusing agent(s). In some examples, a single non-ionic, cationic, or anionic surfactant may be included in the fusing agent.

The balance of the fusing agent(s) is water (e.g., deionized water, purified water, etc.), which as described herein, may vary depending upon the other components in the fusing agent(s).

### Detailing Agent

Some examples of the multi-fluid kit and/or 3D printing kit include a detailing agent. The detailing agent may include a surfactant, a co-solvent, and a balance of water. In some examples, the detailing agent consists of these components, and no other components. In some other examples, the detailing agent may further include a colorant. In still some other examples, detailing agent consists of a colorant, a surfactant, a co-solvent, and a balance of water, with no other components. In yet some other examples, the detailing agent may further include additional components, such as anti-kogation agent(s), antimicrobial agent(s), and/or chelating agent(s) (each of which is described above in reference to the hydrophobic agent).

The surfactant(s) that may be used in the detailing agent include any one or combination of surfactants listed herein in reference to the hydrophobic agent. The total amount of surfactant(s) in the detailing agent may range from about 0.10 wt% active to about 5.00 wt% active with respect to the total weight of the detailing agent.

The co-solvent(s) that may be used in the detailing agent include any of the co-solvents listed above in reference to the hydrophobic agent. The total amount of co-solvent(s) in the detailing agent may range from about 1.00 wt% to about 65.00 wt% with respect to the total weight of the detailing agent.

In some examples, the detailing agent does not include a colorant. In these examples, the detailing agent may be colorless. As used herein, "colorless," means that the detailing agent is achromatic and does not include a colorant.

When the detailing agent includes the colorant, the colorant may be a dye of any color having substantially no absorbance in a range of 650 nm to 2500 nm. By "substantially no absorbance" it is meant that the dye absorbs no radiation having wavelengths in a range of 650 nm to 2500 nm, or that the dye absorbs less than 10% of radiation having wavelengths in a range of 650 nm to 2500 nm. The dye may also be capable of absorbing radiation with wavelengths of 650 nm or less. As such, the dye absorbs at least some wavelengths within the visible spectrum, but absorbs little or no wavelengths within the near-infrared spectrum. This is in contrast to the active (energy absorbing) material in the fusing agent, which absorbs wavelengths within the near-infrared spectrum. As such, the colorant in the detailing agent will not substantially absorb the fusing radiation, and thus will not initiate melting and fusing (coalescence) of the build material composition in contact therewith when the build material layer is exposed to the energy.

It may be desirable to add color to the detailing agent when the detailing agent is applied to the edge of a colored part. Color in the detailing agent may be desirable when used at a part edge because some of the colorant may become embedded in the build material 24 that fuses/coalesces at the edge. As such, in some examples, the dye in the detailing agent may be selected so that its color matches the color of the active material in the fusing agent. As examples, the dye may be any azo dye having sodium or potassium counter ion(s) or any diazo (i.e., double azo) dye having sodium or potassium counter ion(s), where the color of azo or dye azo dye matches the color of the fusing agent.

In an example, the dye is a black dye. Some examples of the black dye include azo dyes having sodium or potassium counter ion(s) and diazo (i.e., double azo) dyes having sodium or potassium counter ion(s). Examples of azo and diazo dyes may include tetrasodium (6Z)-4-acetamido-5-oxo-6-[[7-sulfonato-4-(4-sulfonatophenyl)azo-1-naphthyl]hydrazono]naphthalene-1,7-disulfonate with a chemical structure of: 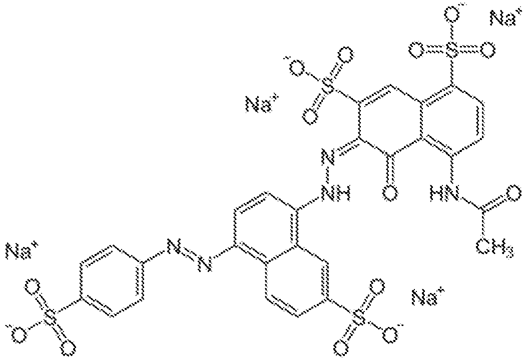 (commercially available as Food Black 1); tetrasodium 6-amino-4-hydroxy-3-[[7-sulfonato-4-[(4-sulfonatophenyl)azo]-1-naphthyl]azo]naphthalene-2,7-disulfonate with a chemical structure of: 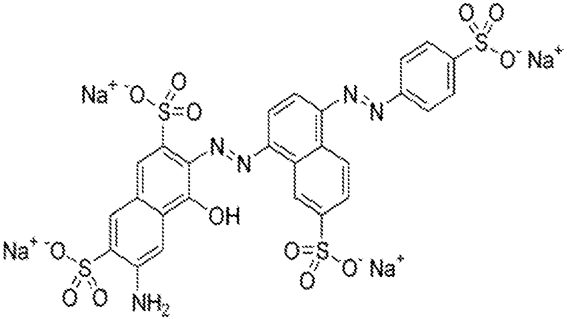 (commercially available as Food Black 2); tetrasodium (6E)-4-amino-5-oxo-3-[[4-(2-sulfonatooxyethylsulfonyl)phenyl]diazenyl]-6-[[4-(2-sulfonatooxyethylsulfonyl)phenyl]hydrazinylidene]naphthalene-2,7-disulfonate with a chemical structure of: 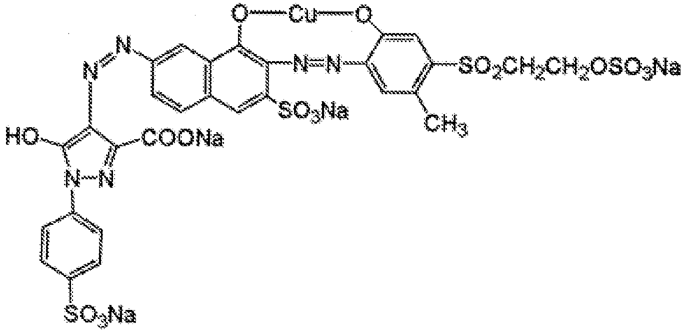 (commercially available as Reactive Black 31); tetrasodium (6E)-4-amino-5-oxo-3-[[4-(2-sulfonatooxyethylsulfonyl)phenyl]diazenyl]-6-[[4-(2-sulfonatooxyethylsulfonyl)phenyl]hydrazinylidene]naphthalene-2,7-disulfonate with a chemical structure of: 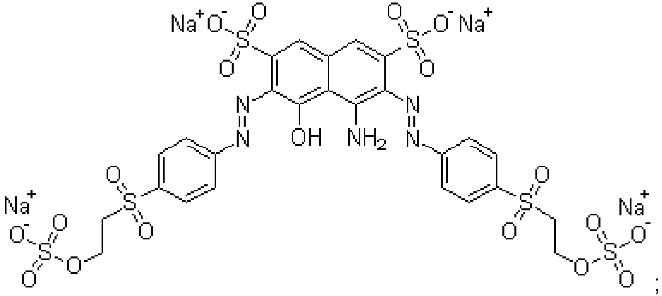 and combinations thereof. Some other commercially available examples of the dye used in the detailing agent include multipurpose black azo-dye based liquids, such as PRO-JET^{®} Fast Black 1 (made available by Fujifilm Holdings), and black azo-dye based liquids with enhanced water fastness, such as PRO-JET^{®} Fast Black 2 (made available by Fujifilm Holdings).

In some instances, in addition to the black dye, the colorant in the detailing agent may further include another dye. In an example, the other dye may be a cyan dye that is used in combination with any of the dyes disclosed herein. The other dye may also have substantially no absorbance above 650 nm. The other dye may be any colored dye that contributes to improving the hue and color uniformity of the final 3D part.

Some examples of the other dye include a salt, such as a sodium salt, an ammonium salt, or a potassium salt. Some specific examples include ethyl-[4-[[4-[ethyl-[(3-sulfophenyl) methyl] amino] phenyl]-(2-sulfophenyl) ethylidene]-1-cyclohexa-2,5-dienylidene]-[(3-sulfophenyl) methyl] azanium with a chemical structure of: 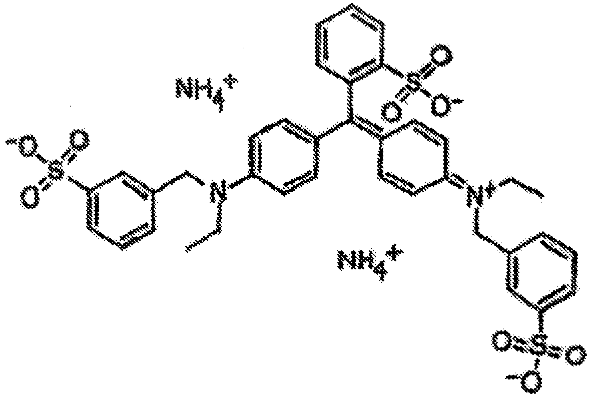 (commercially available as Acid Blue 9, where the counter ion may alternatively be sodium counter ions or potassium counter ions); sodium 4-[(E)-{4-[benzyl(ethyl)amino]phenyl}{(4E)-4-[benzyl(ethyl)iminio]cyclohexa-2,5-dien-1-ylidene}methyl]benzene-1,3-disulfonate with a chemical structure of: 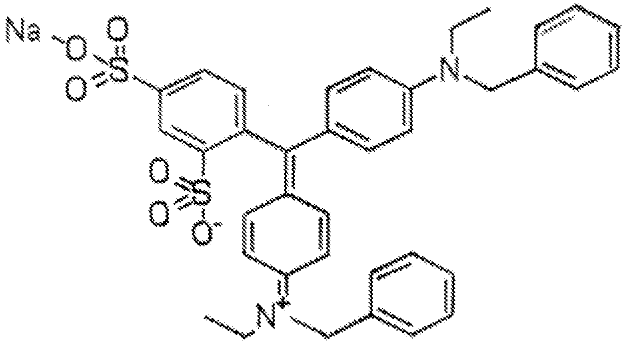 (commercially available as Acid Blue 7); and a phthalocyanine with a chemical structure of: 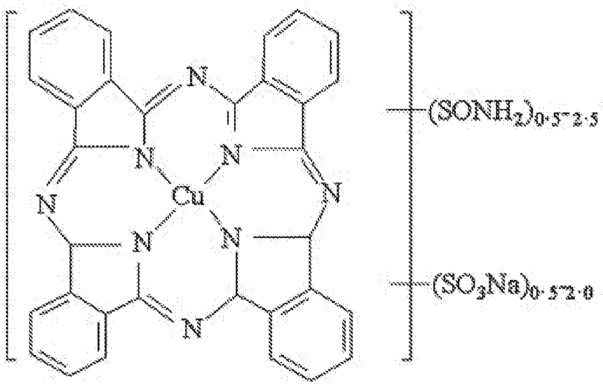 (commercially available as Direct Blue 199); and combinations thereof.

In an example of the detailing agent, the dye may be present in an amount ranging from about 1.00 wt% active to about 3.00 wt% active based on the total weight of the detailing agent. In another example of the detailing agent including a combination of dyes, one dye (e.g., the black dye) is present in an amount ranging from about 1.50 wt% active to about 1.75 wt% active based on the total weight of the detailing agent, and the other dye (e.g., the cyan dye) is present in an amount ranging from about 0.25 wt% active to about 0.50 wt% active based on the total weight of the detailing agent.

The balance of the detailing agent is water. As such, the amount of water may vary depending upon the amounts of the other components that are included.

### Coloring Agent

Some examples of the multi-fluid kit and/or 3D printing kit include a coloring agent. The coloring agent may include a colorant, a co-solvent, and a balance of water. In some examples, the coloring agent consists of these components, and no other components. In some other examples, the coloring agent may further include a binder (e.g., an acrylic latex binder, which may be a copolymer of any two or more of styrene, acrylic acid, methacrylic acid, methyl methacrylate, ethyl methacrylate, and butyl methacrylate) and/or a buffer. In still other examples, the coloring agent may further include additional components, such as dispersant(s), humectant(s), surfactant(s), anti-kogation agent(s), antimicrobial agent(s), and/or chelating agent(s) (each of which is described herein in reference to the hydrophobic agent and/or fusing agents).

The coloring agent may be a black agent, a cyan agent, a magenta agent, or a yellow agent. As such, the colorant may be a black colorant, a cyan colorant, a magenta colorant, a yellow colorant, or a combination of colorants that together achieve a black, cyan, magenta, or yellow color.

In some instances, the colorant of the coloring agent may be transparent to infrared wavelengths. In other instances, the colorant of the coloring agent may not be completely transparent to infrared wavelengths, but does not absorb enough radiation to sufficiently heat the build material composition in contact therewith. In an example, the colorant absorbs less than 10% of radiation having wavelengths in a range of 650 nm to 2500 nm. In another example, the colorant absorbs less than 20% of radiation having wavelengths in a range of 650 nm to 4000 nm.

The colorant of the coloring agent is also capable of absorbing radiation with wavelengths of 650 nm or less. As such, the colorant absorbs at least some wavelengths within the visible spectrum, but absorbs little or no wavelengths within the near-infrared spectrum. This is in contrast to at least some examples of the energy absorber in the fusing agent, which absorbs wavelengths within the near-infrared spectrum and/or the infrared spectrum. As such, the colorant in the coloring agent will not substantially absorb the fusing radiation, and thus will not initiate coalescing/fusing of the build material composition in contact therewith when the build material composition is exposed to energy.

Examples of IR transparent colorants include acid yellow 23 (AY 23), AY17, acid red 52 (AR 52), AR 289, and reactive red 180 (RR 180). Examples of colorants that absorb some visible wavelengths and some IR wavelengths include cyan colorants, such as direct blue 199 (DB 199) and pigment blue 15:3 (PB 15:3).

In other examples, the colorant may be any azo dye having sodium or potassium counter ion(s) or any diazo (i.e., double azo) dye having sodium or potassium counter ion(s), such as those described herein for the detailing agent.

An example of the pigment based coloring agent may include from about 1 wt% to about 10 wt% of pigment(s), from about 10 wt% to about 30 wt% of co-solvent(s), from about 1 wt% to about 10 wt% of dispersant(s), from about 0.1 wt% to about 5 wt% of binder(s), from 0.01 wt% to about 1 wt% of anti-kogation agent(s), from about 0.05 wt% to about 0.1 wt% antimicrobial agent(s), and a balance of water. An example of the dye based coloring agent may include from about 1 wt% to about 7 wt% of dye(s), from about 10 wt% to about 30 wt% of co-solvent(s), from about 1 wt% to about 7 wt% of dispersant(s), from about 0.05 wt% to about 0.1 wt% antimicrobial agent(s), from 0.05 wt% to about 0.1 wt% of chelating agent(s), from about 0.005 wt% to about 0.2 wt% of buffer(s), and a balance of water.

Some examples of the coloring agent include a set of cyan, magenta, and yellow agents, such as C1893A (cyan), C1984A (magenta), and C1985A (yellow); or C4801A (cyan), C4802A (magenta), and C4803A (yellow); all of which are available from HP Inc. Other commercially available coloring agents 18 include C9384A (printhead HP 72), C9383A (printhead HP 72), C4901A (printhead HP 940), and C4900A (printhead HP 940).

### Build Material Composition

The build material composition includes a polymeric build material. Examples of suitable polymeric materials include a polyamide (PAs) (e.g., PA 11 / nylon 11, PA 12 / nylon 12, PA 6 / nylon 6, PA 8 / nylon 8, PA 9 / nylon 9, PA 66 / nylon 66, PA 612 / nylon 612, PA 812 / nylon 812, PA 912 / nylon 912, etc.), a thermoplastic polyamide (TPA), a thermoplastic polyurethane (TPU), a styrenic block copolymer (TPS), a thermoplastic polyolefin elastomer (TPO), a thermoplastic vulcanizate (TPV), thermoplastic copolyester (TPC), a polyether block amide (PEBA), and a combination thereof.

In some examples, the polymeric build material may be in the form of a powder. In other examples, the polymeric build material may be in the form of a powder-like material, which includes, for example, short fibers having a length that is greater than its width. In some examples, the powder or powder-like material may be formed from, or may include, short fibers that may, for example, have been cut into short lengths from long strands or threads of material.

The polymeric build material may be made up of similarly sized particles and/or differently sized particles. In an example, the average particle size of the polymeric build material 16 ranges from about 2 µm to about 225 µm. In another example, the average particle size of the polymeric build material 16 ranges from about 10 µm to about 130 µm. The term "average particle size", as used herein, may refer to a number-weighted mean diameter or a volume-weighted mean diameter of a particle distribution.

When the polymeric build material is a polyamide, the polymer may have a wide processing window of greater than 5°C, which can be defined by the temperature range between the melting point and the re-crystallization temperature. In an example, the polymer may have a melting point ranging from about 50°C to about 300°C. As other examples, the polymer may have a melting point ranging from about 155°C to about 225°C, from about 155°C to about 215°C, about 160°C to about 200°C, from about 170°C to about 190°C, or from about 182°C to about 189°C. As still another example, the polymer may be a polyamide having a melting point of about 180°C.

When the polymeric build material is a thermoplastic elastomer, the thermoplastic elastomer may have a melting range within the range of from about 130°C to about 250°C. In some examples (e.g., when the thermoplastic elastomer is a polyether block amide), the thermoplastic elastomer may have a melting range of from about 130°C to about 175°C. In some other examples (e.g., when the thermoplastic elastomer is a thermoplastic polyurethane), the thermoplastic elastomer may have a melting range of from about 130°C to about 180°C or a melting range of from about 175°C to about 210°C.

In some examples, the polymeric build material does not substantially absorb radiation having a wavelength within the range of 300 nm to 1400 nm. The phrase "does not substantially absorb" means that the absorptivity of the thermoplastic elastomer at a particular wavelength is 25% or less (e.g., 20%, 10%, 5%, etc.)

In some examples, in addition to the polymeric build material, the build material composition may include an antioxidant, a whitener, an antistatic agent, a flow aid, or a combination thereof. While several examples of these additives are provided, it is to be understood that these additives are selected to be thermally stable (i.e., will not decompose) at the 3D printing temperatures.

Antioxidant(s) may be added to the build material composition to prevent or slow molecular weight decreases of the polymeric build material and/or to prevent or slow discoloration (e.g., yellowing) of the polymeric build material by preventing or slowing oxidation of the polymeric build material. In some examples, the polymeric material may discolor upon reacting with oxygen, and this discoloration may contribute to the discoloration of the build material composition. The antioxidant may be selected to minimize discoloration. In some examples, the antioxidant may be a radical scavenger. In these examples, the antioxidant may include IRGANOX^{®} 1098 (benzenepropanamide, N,N'-1,6-hexanediylbis(3,5-bis(1,1-dimethylethyl)-4-hydroxy)), IRGANOX^{®} 254 (a mixture of 40% triethylene glycol bis(3-tert-butyl-4-hydroxy-5-methylphenyl), polyvinyl alcohol and deionized water), and/or other sterically hindered phenols. In other examples, the antioxidant may include a phosphite and/or an organic sulfide (e.g., a thioester). The antioxidant may be in the form of fine particles (e.g., having an average particle size of 5 µm or less) that are dry blended with the polymeric build material 16. In an example, the antioxidant may be included in the build material composition in an amount ranging from about 0.01 wt% to about 5 wt%, based on the total weight of the build material composition. In other examples, the antioxidant may be included in the build material composition in an amount ranging from about 0.01 wt% to about 2 wt% or from about 0.2 wt% to about 1 wt%, based on the total weight of the build material composition.

Whitener(s) may be added to the build material composition to improve visibility. Examples of suitable whiteners include titanium dioxide (TiO₂), zinc oxide (ZnO), calcium carbonate (CaCO₃), zirconium dioxide (ZrO₂), aluminum oxide (Al₂O₃), silicon dioxide (SiO₂), boron nitride (BN), and combinations thereof. In some examples, a stilbene derivative may be used as the whitener and a brightener. In these examples, the temperature(s) of the 3D printing process may be selected so that the stilbene derivative remains stable (i.e., the 3D printing temperature does not thermally decompose the stilbene derivative). In an example, any example of the whitener may be included in the build material composition in an amount ranging from greater than 0 wt% to about 10 wt%, based on the total weight of the build material composition.

Antistatic agent(s) may be added to the build material composition to suppress tribo-charging. Examples of suitable antistatic agents include aliphatic amines (which may be ethoxylated), aliphatic amides, quaternary ammonium salts (e.g., behentrimonium chloride or cocamidopropyl betaine), esters of phosphoric acid, polyethylene glycolesters, or polyols. Some suitable commercially available antistatic agents include HOSTASTAT^{®} FA 38 (natural based ethoxylated alkylamine), HOSTASTAT^{®} FE2 (fatty acid ester), and HOSTASTAT^{®} HS 1 (alkane sulfonate), each of which is available from Clariant Int. Ltd.). In an example, the antistatic agent is added in an amount ranging from greater than 0 wt% to less than 5 wt%, based upon the total weight of the build material composition.

Flow aid(s) may be added to improve the coating flowability of the build material composition. Flow aids may be particularly beneficial when the build material composition has an average particle size less than 25 µm. The flow aid improves the flowability of the build material composition by reducing the friction, the lateral drag, and the tribocharge buildup (by increasing the particle conductivity). Examples of suitable flow aids include aluminum oxide (Al₂O₃), tricalcium phosphate (E341), powdered cellulose (E460(ii)), magnesium stearate (E470b), sodium bicarbonate (E500), sodium ferrocyanide (E535), potassium ferrocyanide (E536), calcium ferrocyanide (E538), bone phosphate (E542), sodium silicate (E550), silicon dioxide (E551), calcium silicate (E552), magnesium trisilicate (E553a), talcum powder (E553b), sodium aluminosilicate (E554), potassium aluminum silicate (E555), calcium aluminosilicate (E556), bentonite (E558), aluminum silicate (E559), stearic acid (E570), and polydimethylsiloxane (E900). In an example, the flow aid is added in an amount ranging from greater than 0 wt% to less than 5 wt%, based upon the total weight of the build material composition.

### Printing Methods and Methods of Use

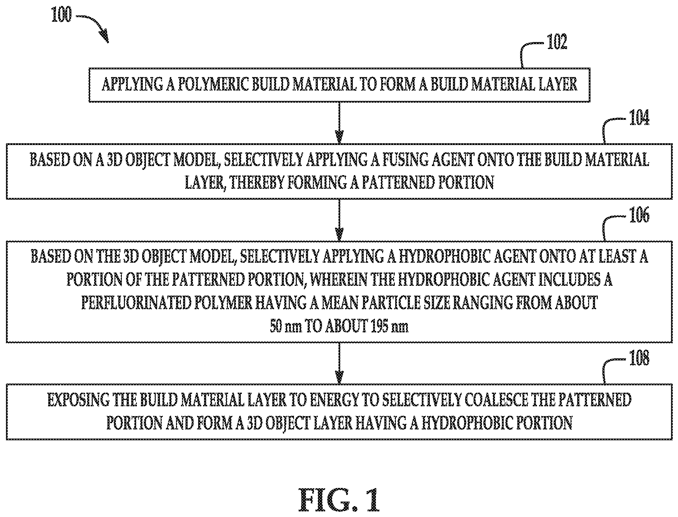

Different examples of the 3D printing method are shown and described in reference to Fig. 1 through Fig. 6.

Prior to execution of any examples of the method, it is to be understood that a controller may access data stored in a data store pertaining to a 3D part/object that is to be printed. For example, the controller may determine the number of layers of the build material composition that are to be formed, the locations at which any of the agents is/are to be deposited on each of the respective layers, etc.

### Printing with the Hydrophobic Agent and one Fusing Agent

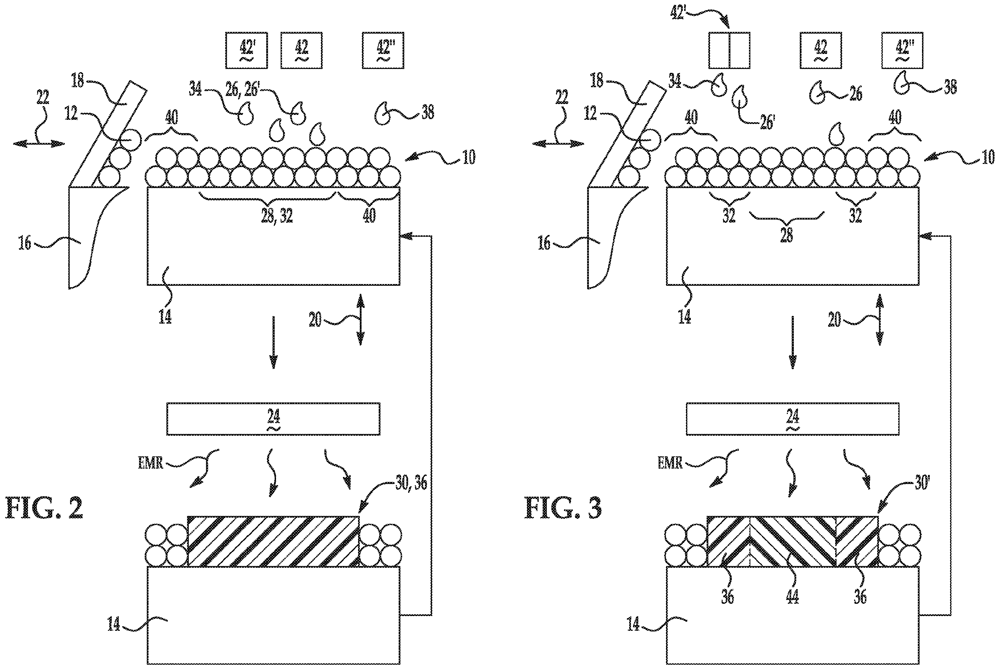

Referring now to Fig. 1 and Fig. 2, an example of the method 100 which utilizes the hydrophobic agent and one of the fusing agents is depicted.

The method 100 shown in Fig. 1 includes applying a polymeric build material to form a build material layer (reference numeral 102); based on a 3D object model, selectively applying a fusing agent onto the build material layer, thereby forming a patterned portion (reference numeral 104); based on the 3D object model, selectively applying a hydrophobic agent onto at least a portion of the patterned portion, wherein the hydrophobic agent includes a perfluorinated polymer having a mean particle size ranging from about 50 nm to about 195 nm (reference numeral 106); and exposing the build material layer to energy to selectively coalesce the patterned portion and form a 3D object layer having a hydrophobic portion (reference numeral 108).

The method 100 is shown schematically in Fig. 2. In Fig. 2, a layer 10 of the build material composition 12 is applied on a build area platform 14. A printing system may be used to apply the build material composition 12. The printing system may include the build area platform 14, a build material supply 16 containing the build material composition 12, and a build material distributor 18.

The build area platform 14 receives the build material composition 12 from the build material supply 16. The build area platform 14 may be moved in the directions as denoted by the arrow 20, e.g., along the z-axis, so that the build material composition 12 may be delivered to the build area platform 14 or to a previously formed layer. In an example, when the build material composition 12 is to be delivered, the build area platform 14 may be programmed to advance (e.g., downward) enough so that the build material distributor 18 can push the build material composition 12 onto the build area platform 14 to form a substantially uniform layer 10 of the build material composition 12 thereon. The build area platform 14 may also be returned to its original position, for example, when a new part is to be built.

The build material supply 16 may be a container, bed, or other surface that is to position the build material composition 12 between the build material distributor 18 and the build area platform 14. The build material supply 16 may include heaters so that the build material composition 12 is heated to a supply temperature ranging from about 25°C to about 150°C. In these examples, the supply temperature may depend, in part, on the build material composition 12 used and/or the 3D printer used. As such, the range provided is one example, and higher or lower temperatures may be used.

The build material distributor 18 may be moved in the directions as denoted by the arrow 22, e.g., along the y-axis, over the build material supply 16 and across the build area platform 14 to spread the layer 10 of the build material composition 12 over the build area platform 14. The build material distributor 18 may also be returned to a position adjacent to the build material supply 16 following the spreading of the build material composition 12. The build material distributor 18 may be a blade (e.g., a doctor blade), a roller, a combination of a roller and a blade, and/or any other device capable of spreading the build material composition 12 over the build area platform 14. For instance, the build material distributor 18 may be a counter-rotating roller. In some examples, the build material supply 16 or a portion of the build material supply 16 may translate along with the build material distributor 18 such that build material composition 12 is delivered continuously to the build area platform 14 rather than being supplied from a single location at the side of the printing system as depicted in Fig. 2.

The build material supply 16 may supply the build material composition 12 into a position so that it is ready to be spread onto the build area platform 14. The build material distributor 18 may spread the supplied build material composition 12 onto the build area platform 14. The controller (not shown) may process "control build material supply" data, and in response, control the build material supply 16 to appropriately position the particles of the build material composition 12, and may process "control spreader" data, and in response, control the build material distributor 18 to spread the build material composition 12 over the build area platform 14 to form the layer 10 of the build material composition 12 thereon. In Fig. 2, one build material layer 10 has been formed.

The layer 10 has a substantially uniform thickness across the build area platform 14. In an example, the build material layer 10 has a thickness ranging from about 50 µm to about 120 µm. In another example, the thickness of the build material layer 26 ranges from about 30 µm to about 300 µm. It is to be understood that thinner or thicker layers may also be used. For example, the thickness of the build material layer 10 may range from about 20 µm to about 500 µm. The layer thickness may be about 2x (i.e., 2 times) the average diameter of the build material composition particles at a minimum for finer part definition. In some examples, the layer thickness may be about 1.2x the average diameter of the build material composition particles.

After the build material composition 12 has been applied, and prior to further processing, the build material layer 10 may be exposed to heating. In an example, the heating temperature may be below the melting point or melting range of the polymeric material of the build material composition 12. As examples, the pre-heating temperature may range from about 5°C to about 50°C below the melting point or the lowest temperature of the melting range of the polymeric material. In an example, the pre-heating temperature ranges from about 50°C to about 205°C. In still another example, the pre-heating temperature ranges from about 100°C to about 190°C. It is to be understood that the pre-heating temperature may depend, in part, on the build material composition 12 used. As such, the ranges provided are some examples, and higher or lower temperatures may be used.

Pre-heating the layer 10 may be accomplished by using any suitable heat source that exposes all of the build material composition 12 in the layer 10 to the heat. Examples of the heat source include a thermal heat source (e.g., a heater (not shown) integrated into the build area platform 14 (which may include sidewalls)) or a radiation source 24.

After the layer 10 is formed, and in some instances is pre-heated, the fusing agent(s) 26 or 26' is selectively applied on at least some of the build material composition 12 in the layer 10 to form a patterned portion 28.

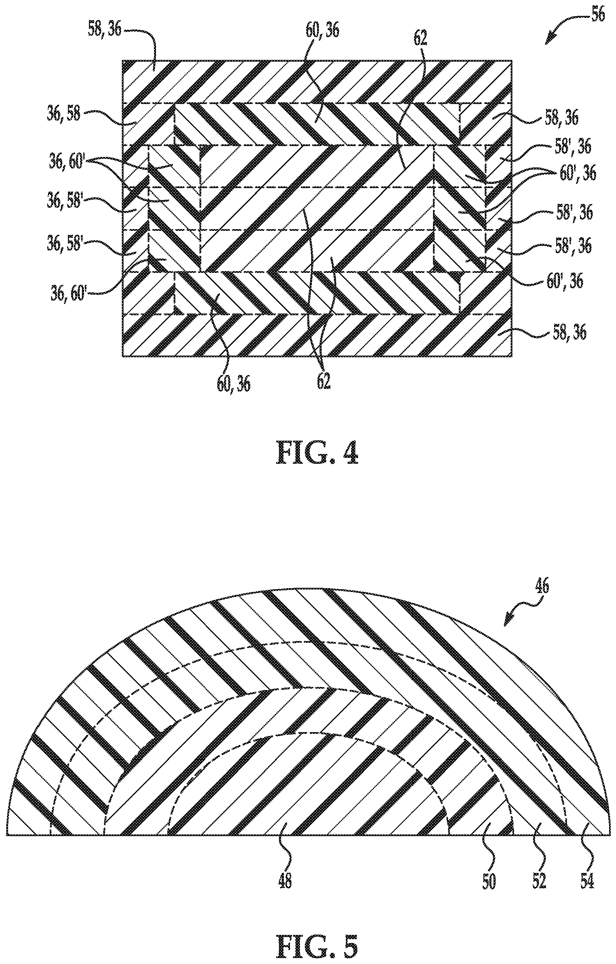

To form a layer 30 of a 3D object, at least a portion (e.g., patterned portion 28) of the layer 10 of the build material composition 12 is patterned with the fusing agent 26, 26'. Either fusing agent 26 or 26' may be used. When it is desirable to form a white, colored, or slightly tinted object layer 30, the primer fusing agent 26' may be used to pattern the build material composition 12. The primer fusing agent 26' is clear or slightly tinted, and thus the resulting 3D object layer 30 may appear white or the color of the build material composition 12. When it is desirable to form a darker color or black object layer 30, the core fusing agent 26 may be used. The core fusing agent 26 is dark or black, and thus the resulting 3D object layer 30 may appear grey, black or another dark color. In other examples of the method (e.g., see Fig. 3) the two fusing agents 26, 26' may be used to pattern different portions of a single build material layer 10. Color may also be added by using the coloring agent (not shown), which will also be described further in reference to Fig. 4.

The volume of the fusing agent 26, 26' that is applied per unit of the build material composition 12 in the patterned portion 28 may be sufficient to absorb and convert enough electromagnetic radiation so that the build material composition 12 in the patterned portion 28 will coalesce/fuse. The volume of the fusing agent 26, 26' that is applied per unit of the build material composition 12 may depend, at least in part, on the energy absorber used, the energy absorber loading in the fusing agent 26, 26', and the build material composition 12 used.

To increase the hydrophobicity of at least a portion of the layer 30 of the 3D object, corresponding portion(s) 32 of the patterned portion 28 is/are also patterned with the hydrophobic agent 34. The hydrophobic agent 34 may be applied in accordance with 3D object model wherever it is desirable for the final 3D object layer 30 to exhibit hydrophobicity. Utilizing a hydrophobic agent 34 that is separate from the fusing agent 26, 26' enables 3D objects with tailored hydrophobic areas to be formed. In the example shown in Fig. 2, the 3D object layer 30 is an outermost layer, and thus forms one surface of the 3D object. The hydrophobic agent 34 is applied to impart hydrophobicity to this surface of the 3D object.

The volume of the hydrophobic agent 34 that is applied per unit of the build material composition 12 in the portion 32 may depend upon whether it is desirable to impart hydrophobicity at the voxel surface and/or through the voxel volume, upon the desired hydrophobicity of the resulting portion(s) 36 of the 3D object layer 30, and the volume of the fusing agent 26, 26' that is applied.

The ability of the perfluorinated polymer in the hydrophobic agent 34 to intermingle with the build material particles can help to impart hydrophobicity. However, if too much of the hydrophobic agent 34 is applied, the perfluorinated polymer can coat the build material particles, which can prevent coalescence of the build material composition 12. As such, the ratio of hydrophobic agent 34 to fusing agent 26 or 26' is controlled in order to achieve both fusing and a desired level of hydrophobicity. In an example, a weight ratio of the perfluorinated polymer in the selectively applied hydrophobic agent 34 to an energy absorber in the selectively applied fusing agent 26, 26' ranges from about 0.1 to about 5. In another example, the weight of the perfluorinated polymer applied to the portion 34 ranges from about 1.5 times to about 2.25 times more than the weight of the energy absorber applied to the portion 34.

Moreover, it may be desirable to deposit the fusing agent 26, 26' prior to depositing the hydrophobic agent 34.

In the example shown in Fig. 2, the detailing agent 38 is also selectively applied to the portion(s) 40 of the layer 10. The portion(s) 40 are not patterned with the fusing agent 26, 26' and thus are not to become part of the final 3D object layer 30. Thermal energy generated during radiation exposure may propagate into the surrounding portion(s) 40 that do not have the fusing agent 26, 26' applied thereto. The propagation of thermal energy may be inhibited, and thus the coalescence of the non-patterned build material portion(s) 40 may be prevented, when the detailing agent 38 is applied to these portion(s) 44.

After the agents 26 or 26', 34, and 38 are selectively applied in the specific portion(s) 28, 32, and 40 of the layer 10, the entire layer 10 of the build material composition 12 is exposed to electromagnetic radiation (shown as EMR in Fig. 2).

The electromagnetic radiation is emitted from the radiation source 24. The length of time the electromagnetic radiation is applied for, or energy exposure time, may be dependent, for example, on one or more of: characteristics of the radiation source 24; characteristics of the build material composition 12; and/or characteristics of the fusing agent 26, 26'.

It is to be understood that the electromagnetic radiation exposure may be accomplished in a single radiation event or in multiple radiation events. In an example, the exposing of the build material composition 12 is accomplished in multiple radiation events. In a specific example, the number of radiation events ranges from 3 to 8. In still another specific example, the exposure of the build material composition 12 to electromagnetic radiation may be accomplished in 3 radiation events. It may be desirable to expose the build material composition 12 to electromagnetic radiation in multiple radiation events to counteract a cooling effect that may be brought on by the amount of the agents 26 or 26', 34, 38 that is applied to the build material layer 10. Additionally, it may be desirable to expose the build material composition 12 to electromagnetic radiation in multiple radiation events to sufficiently elevate the temperature of the build material composition 12 in the portion(s) 28, 32, without over heating the build material composition 12 in the non-patterned portion(s) 40.

The fusing agent 26 or 26' enhances the absorption of the radiation, converts the absorbed radiation to thermal energy, and promotes the transfer of the thermal heat to the build material composition 12 in contact therewith. In an example, the fusing agent 26, 26' sufficiently elevates the temperature of the build material composition 12 in the portion 28 to a temperature above the melting point or within the melting range of the polymeric material, allowing coalescing/fusing (e.g., thermal merging, melting, binding, etc.) of the build material composition 12 to take place. The application of the electromagnetic radiation forms the 3D object layer 30, which, in some examples, includes a hydrophobic portion 36.

In some examples, the electromagnetic radiation has a wavelength ranging from 800 nm to 4000 nm, or from 800 nm to 1400 nm, or from 800 nm to 1200 nm. Radiation having wavelengths within the provided ranges may be absorbed (e.g., 80% or more of the applied radiation is absorbed) by the fusing agent 26, 26' and may heat the build material composition 12 in contact therewith, and may not be substantially absorbed (e.g., 25% or less of the applied radiation is absorbed) by the non-patterned build material composition 12 in portion(s) 40.

In the example shown in Fig. 2, the 3D object layer 30 has a portion 36 with hydrophobicity (which corresponds with the portion 32 patterned with both the fusing agent 26, 26' and the hydrophobic agent 34).

After the 3D object layer 30 is formed, additional layer(s) may be formed thereon to create an example of the 3D object. To form the next layer, additional build material composition 12 may be applied on the layer 30. The fusing agent 26 or 26' is then selectively applied on at least a portion of the additional build material composition 12, according to the 3D object model. The hydrophobic agent 34 may also be applied, for example, if increased hydrophobicity is desired in the next layer. The detailing agent 38 may be applied in any area of the additional build material composition 12 where coalescence is not desirable. After the agent(s) 26 or 26', 34, 38 is/are applied, the entire layer of the additional build material composition 12 is exposed to electromagnetic radiation in the manner described herein. The application of additional build material composition 12, the selective application of the agent(s) 26 or 26', 34, 38, and the electromagnetic radiation exposure may be repeated a predetermined number of cycles to form the final 3D object 30 in accordance with the 3D object model.

Some examples of the method 100 include repeating the applying of the polymeric build material 12, the selectively applying of the fusing agent 26 or 26', the selectively applying of the hydrophobic agent 34, and the exposing, to form a predetermined number of 3D object layers and a 3D printed object, wherein the hydrophobic portion 36 extends around an exterior of the 3D printed object. In these examples, the hydrophobic agent 34 may be applied on build material that is at or adjacent to object edges, according to the 3D object model.

Some examples of the method 100 also include applying the hydrophobic agent 34 on the hydrophobic portion 36 of the 3D printed object. In these examples, the hydrophobic agent 34 may be selectively applied to the hydrophobic portions 36 in order to form a coating layer of the perfluorinated polymer on the exterior surfaces of the 3D printed object that already exhibit some hydrophobicity. The 3D object model may be used to identify the locations of the hydrophobic portion 36 so that the hydrophobic agent 34 is applied in the desirable areas.

Prior to selectively applying the hydrophobic agent 34 on the hydrophobic portion(s) 36, any non-coalesced build material particles may be removed from the 3D printed object via any suitable technique.

### Printing with the Hydrophobic Agent and Both Fusing Agents

Referring now to Fig. 3, an example of the method which utilizes the hydrophobic agent 34 and both of the fusing agents 26 and 26' is depicted.

In Fig. 3, one layer 10 of the build material composition 12 is applied on the build area platform 14 as described in reference to Fig. 2. After the build material composition 12 has been applied, and prior to further processing, the build material layer 10 may be exposed to pre-heating as described in reference to Fig. 2.

In this example of the method, the core fusing agent(s) 26 is selectively applied on at least some of the build material composition 12 in the layer 10 to form a first patterned portion 28; and the primer fusing agent(s) 26' and the hydrophobic agent 34 are selectively applied on at least some of the build material composition 12 in the layer 10 to form second patterned portion(s) 32 that are adjacent to the first patterned portion 28. The first patterned portion 28 is generally located at an interior portion of the build material layer 10 and the second patterned portion 32 is generally located at an exterior portion of the build material layer 10 where it is desirable to impart hydrophobicity at one or more surface(s) of the 3D printed object layer 30'.

The volume of the core fusing agent 26 that is applied per unit of the build material composition 12 in the first patterned portion 28 may be sufficient to absorb and convert enough electromagnetic radiation so that the build material composition 12 in the patterned portion 28 will coalesce/fuse.

The volume of the primer fusing agent 26' that is applied per unit of the build material composition 12 in the second patterned portion 32 may be sufficient to absorb and convert enough electromagnetic radiation so that the build material composition 12 in the second patterned portion 32 will coalesce/fuse.

The volume of the hydrophobic agent 34 that is applied per unit of the build material composition 12 in the second patterned portion 32 may depend upon whether it is desirable to impart hydrophobicity at the voxel surface and/or through the voxel volume, upon the desired hydrophobicity of the resulting portion(s) 36 of the 3D object layer 30', and the volume of the primer fusing agent 26' that is applied. The weight ratio of the perfluorinated polymer to the energy absorber may be controlled in order to achieve both coalescence and hydrophobicity.

In the example shown in Fig. 3, the detailing agent 38 is also selectively applied to the portion(s) 40 of the layer 10. The portion(s) 40 are not patterned with the fusing agent 26, 26' and thus are not to become part of the final 3D object layer 30'.

After the agents 26, 26', 34, and 38 are selectively applied in the specific portion(s) 28, 32, and 40 of the layer 10, the entire layer 10 of the build material composition 12 is exposed to electromagnetic radiation (shown as EMR in Fig. 3). Radiation exposure may be accomplished as described in reference to Fig. 2.

In this example, the respective fusing agents 26 and 26' enhance the absorption of the radiation, convert the absorbed radiation to thermal energy, and promote the transfer of the thermal heat to the build material composition 12 in contact therewith. In an example, the fusing agents 26, 26' sufficiently elevate the temperature of the build material composition 12 in the respective portions 28, 32 to a temperature above the melting point or within the melting range of the polymeric material, allowing coalescing/fusing (e.g., thermal merging, melting, binding, etc.) of the build material composition 12 to take place. The application of the electromagnetic radiation forms the 3D object layer 30', which, in this example, includes a core portion 44 (without added hydrophobicity) and hydrophobic portions 36 at opposed ends of the core portion 44.

Fig. 3 illustrates one example of how the core fusing agent 26, the primer fusing agent 26' and the hydrophobic agent 34 may be used together to pattern a single build material layer 10. In this particular example, the edges of the layer 30' are rendered hydrophobic.

When both fusing agents 26 and 26' are used to build up a 3D object, it may be desirable to utilize the core fusing agent 26 to form the core (e.g., the center or inner-most portion) of the 3D object, and it may be desirable to utilize the primer fusing agent 26' to form the outermost layers of the 3D object. The core fusing agent 26 can impart strength to the core of the 3D object, while the primer fusing agent 26' enables white or a color to be exhibited at the exterior of the 3D object. It is to be understood that the hydrophobic agent 34 may also be used to impart the desirable hydrophobicity to one or more surface portions 36 of the 3D object.

The method 100 shown in Fig. 1 may be modified to include both of the fusing agents 26, 26'. As one example, the method 100 shown in Fig. 1 may be used to form an outer layer (which is hydrophobic) of a 3D printed object, where the fusing agent used is the primer fusing agent 26', and the method 100 may further include forming a core of the 3D printed object by iteratively applying the polymeric build material 12 to form respective build material layers 10; selectively applying the core fusing agent 26 on the respective build material layers 10 to form respective patterned portions 28; and exposing the respective build material layers 10 to energy.

In this example, prior to exposing the respective build material layers 10 to energy, the method may further include patterning hydrophobic edges (similar to patterned portions 32 in Fig. 3) by selectively applying the primer fusing agent 26' on the respective build material layers 10 to form individual patterned portions 32 adjacent to the respective patterned portions 28 and selectively applying the hydrophobic agent 34 onto at least a portion of the individual patterned portions 32.

In this example, a hydrophobic base may also be formed prior to forming the core of the 3D printed object. In this example, the method would further include building the hydrophobic base by iteratively applying the polymeric build material 12 to form individual build material layers 10; selectively applying the primer fusing agent 26' on the individual build material layers 10 to form individual patterned portions 32; and selectively applying the hydrophobic agent 34 onto at least a portion of the individual patterned portions 32; and exposing the individual build material layers 10 to energy. In this example, the core of the 3D printed object is built on the hydrophobic base.

This example of the method 100 may be used to form a 3D object 56 similar to that shown in Fig. 4, which includes a hydrophobic base (e.g., bottom layers 58, 36 and 60, 36), a core portion (layers 62), a hydrophobic outer layer (e.g., top layers (58, 36 and 60, 36), and hydrophobic edges (e.g., side layers 58', 36 and 60', 36). In some examples, the hydrophobic agent 34 may also be selectively applied on the hydrophobic base, the hydrophobic portion(s) of the top outer layer, and the hydrophobic edges.

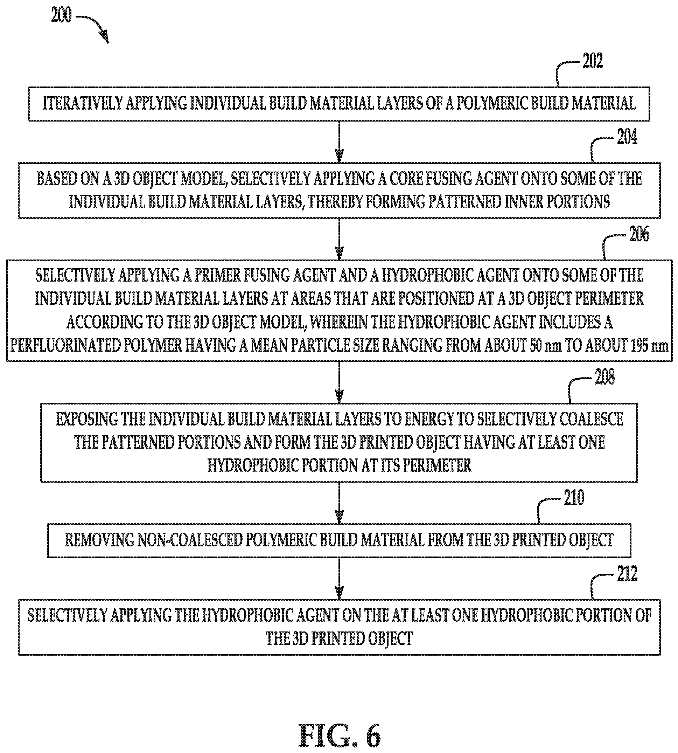

Another example of the method that may be used to form this type of 3D object 56 is shown in Fig. 6. The method 200 shown in Fig. 6 includes iteratively applying individual build material layers of a polymeric build material (reference numeral 202); based on a 3D object model, selectively applying a core fusing agent onto some of the individual build material layers, thereby forming patterned inner portions (reference numeral 204); selectively applying a primer fusing agent and a hydrophobic agent onto some of the individual build material layers at areas that are positioned at a 3D object perimeter according to the 3D object model, wherein the hydrophobic agent includes a perfluorinated polymer having a mean particle size ranging from about 50 nm to about 195 nm (reference numeral 206); exposing the individual build material layers to energy to selectively coalesce the patterned portions and form the 3D printed object having at least one hydrophobic portion at its perimeter (reference numeral 208); removing non-coalesced polymeric build material from the 3D printed object (reference numeral 210); and selectively applying the hydrophobic agent on the at least one hydrophobic portion of the 3D printed object (reference numeral 212).

In this example of the method 200, the entire perimeter may be patterned with the primer fusing agent 26' and the hydrophobic agent 34, or selected layers (bottom, top) and/or edges/sides may be patterned with the primer fusing agent 26' and the hydrophobic agent 34. For example, i) the primer fusing agent 26' and the hydrophobic agent 34 may be selectively applied at edges (similar to portions 32 in Fig. 3) of the patterned inner portions 28 (Fig. 3), and the edges may also be adjacent to non-patterned polymeric build material (e.g., portions 40 in Fig. 3); or ii) the primer fusing agent 26' and the hydrophobic agent 34 may be selectively applied to an outermost plurality of the individual build material layers (e.g., top and/or bottom layers 58, 36 and 60, 36 in Fig. 4); or iii) both i and ii.

Using the method 200 to form the 3D object 56 in Fig. 4, the outermost build material layer(s) and the outermost edges of the middle build material layers would be patterned with the primer fusing agent 26' and the hydrophobic agent 34 to form 3D object layers 58, 60 and 3D object layer edges 58', 60', each of which has the hydrophobic portion 36. Also in this example, the innermost portions of the middle build material layers would be patterned with the core fusing agent 26 to form the core layers 62 of the 3D printed object 56. This example illustrates the hydrophobic portion 36 at the entire exterior (perimeter) of the 3D object 56, but it is to be understood that the hydrophobic agent 34 may be selectively applied so that portions of the exterior (perimeter) are rendered more hydrophobic, while other portions of the exterior (perimeter) are not rendered more hydrophobic.

In the example shown in Fig. 4, the coloring agent may also be applied with the primer fusing agent 26' to generate color at the exterior surfaces of the object 56. For example, the coloring agent may be applied with the primer fusing agent 26' and the hydrophobic agent 34 on the build material that forms the 3D object layers 58 and the 3D object edges 58'. Since the primer fusing agent 26' is clear or slightly tinted and the build material composition 12 is white or off-white, the color of the coloring agent will be the color of the resulting 3D object layers 58 and the 3D object edges 58'. The colorant of the coloring agent becomes embedded throughout the coalesced/fused build material composition of the 3D object layers 58 and the 3D object edges 58'. In this example, the 3D object layers 60 and the 3D object edges 60' (which are white or slightly tinted) may or may not have the coloring agent applied thereto. These intermediate layers 60 and edges 60' may help to form a mask over the black (or dark colored) core layers 62 because they optically isolate the core layers 62.

Another example of a 3D object 46 formed with the primer fusing agent 26' and the hydrophobic agent 34 and the core fusing agent 26 is shown in Fig. 5. To form this example of the 3D object 46, the core fusing agent 26 would be applied on multiple layers of the build material composition 12 to pattern and ultimately form the inner portions 48 and 50 of the 3D printed object 46, and the primer fusing agent 26' and the hydrophobic agent 34 would be applied on multiple layers of the build material composition 12 to pattern and ultimately form the outermost portions 52 and 54 of the 3D printed object 46. After each build material layer 10 is patterned with the agent(s) 26 and/or 26' and 34, electromagnetic radiation may be applied to solidify the respective patterned build material layers.

After the formation of the 3D object, non-coalesced build material may be removed and the hydrophobic agent 34 may be selectively applied to any of the hydrophobic portions 36. To impart color at these portions, the coloring agent may also be applied with the hydrophobic agent 34.

While several variations of the objects 46, 56 and the combinations of fusing agents 26, 26' have been described, it is to be understood that the fusing agents 26, 26' may be used to form any desirable 3D object.

In any of the examples of the method 100, 200 disclosed herein, any of the agents (fusing agent 26, 26', hydrophobic agent 34, detailing agent 38 and/or coloring agent) may be dispensed from an applicator 42, 42', 42" (shown in Fig. 2 and Fig. 3). The applicator(s) 42, 42', 42" may each be a thermal inkjet printhead, a piezoelectric printhead, a continuous inkjet printhead, etc., and the selective application of the fusing agent 26, 26', hydrophobic agent 34, detailing agent 38 and/or coloring agent may be accomplished by thermal inkjet printing, piezo electric inkjet printing, continuous inkjet printing, etc. The controller may process data, and in response, control the applicator(s) 42, 42', 42" to deposit the fusing agent 26, 26', hydrophobic agent 34, detailing agent 38 and/or coloring agent onto predetermined portion(s) of the build material composition 12. It is to be understood that the applicators 42, 42', 42" may be separate applicators or a single applicator with several individual cartridges for dispensing the respective agents.

It is to be understood that the selective application of any of the fusing agent 26, 26', hydrophobic agent 34, detailing agent 38 and/or coloring agent may be accomplished in a single printing pass or in multiple printing passes. In some examples, the agent(s) is/are selectively applied in a single printing pass. In some other examples, the agent(s) is/are selectively applied in multiple printing passes. In one of these examples, the number of printing passes ranging from 2 to 4. In still other examples, 2 or 4 printing passes are used. It may be desirable to apply the fusing agent 26, 26', hydrophobic agent 34, detailing agent 38 and/or coloring agent in multiple printing passes to increase the amount, e.g., of the energy absorber, polyelectrolyte, colorant, etc. that is applied to the build material composition 12, to avoid liquid splashing, to avoid displacement of the build material composition 12, etc.

In any of the examples of the method 100, 200 disclosed herein, differently shaped objects may be printed in different orientations within the printing system. As such, while the object may be printed from the bottom of the object to the top of the object, it may alternatively be printed starting with the top of the object to the bottom of the object, or from a side of the object to another side of the object, or at any other orientation that is suitable or desired for the particular geometry of the part being formed.

To further illustrate the present disclosure, an example is given herein. It is to be understood that this example is provided for illustrative purposes and is not to be construed as limiting the scope of the present disclosure.

### EXAMPLE

Two examples of the hydrophobic agent (HA1 and HA2) were prepared with different perfluoropolymers, and one control agent was prepared without any perfluoropolymer. The formulations are shown in Table 1. The weight percentages in Table 1 represent the active amount unless noted otherwise with the phrase "as is".

**TABLE 1**

| **Category** | **Ingredient** | **HA 1 (wt%)** | **HA 2 (wt%)** | **Control (wt%)** |
|---|---|---|---|---|
| Organic Co-solvent | 2-Pyrrolidone | 10 | 10 | 4 |
| | Triethylenegycol | 8 | 8 | ---- |
| Hydrophobic polymer | Poly(tetrafluoroethylene) | 7.5 | ---- | ---- |
| | Perfluoroalkoxy alkane | ---- | 5 | ---- |
| Surfactant | Non-ionic surfactant with first chain length | 1.0 | 0.5 | 0.85 |
| | Non-ionic surfactant with second chain length | ---- | 0.45 | ---- |
| | Non-ionic surfactant with third chain length | ---- | 0.45 | ---- |
| | Dowfax^{®} 2A1 | 1.0 | ---- | ---- |
| | Dynol^{®} 810 | 0.5 | ---- | ---- |
| | Tego^{®} Wet 510 | ---- | 0.45 | ---- |
| Humectant | Liponic^{®} EG-1 | 5.0 | ---- | ---- |
| Anti-kogation Agent | Crodafos^{®} O3A | ---- | ---- | 0.5 |
| Chelator | Trilon^{®} M (as is) | ---- | ----- | 0.05 |
| Biocide | Acticide^{®} B20 | ---- | ---- | 0.18 |
| | Acticide^{®} M20 | ---- | ----- | 0.14 |
| Buffer | TRIS^{®} | ---- | 0.1 | 0.1 |
| Solvent | Water | Balance | Balance | Balance |

HA 1 and HA 2 were printed with a thermal inkjet printer to determine the printability and decap performance of the hydrophobic agent. Both hydrophobic agents HA 1 and HA 2 exhibited acceptable printing performance.

HA 1 and HA 2 and the control agent were used in a 3D printing process. The build material was polyamide-12 and the fusing agent formulation is shown in Table 2. The weight percentages in Table 2 represent the active amount unless noted otherwise with the phrase "as is".

**TABLE 2**

| **Category** | **Ingredient** | **FA (wt%)** |
|---|---|---|
| Energy Absorber | CTO dispersion | 8 |
| Organic Co-Solvent | 2-pyrollidone | 19 |
| Surfactant | Tergitol^{®} 15-S-9 | 0.75 |
| Anti-kogation Agent | Crodafos^{®} O3A | 0.5 |
| Chelator | Trilon^{®} M (as is) | 0.0064 |
| Biocide | Acticide^{®} B20 | 0.036 |
| Stabilizers | Betaine (from CTO dispersion) | 8 |
| | Beta-alanine | 3 |
| Solvent | Water | Balance |

A layer of the polyamide-12 (with added TiO₂) build material was spread on a build area platform and then was patterned with the fusing agent and exposed to electromagnetic radiation. Additional layers were printed in a similar manner to form cubes. One control cube was printed with the fusing agent and the control agent in the outermost layers (3-5 layers) on each side of the cube. An example cube (example cube 1) was printed with the fusing agent and HA 1 in the outermost layers (3-5 layers) on each side of the cube. Another example cube (example cube 2) was printed with the fusing agent and HA 2 in the outermost layers (3-5 layers) on each side of the cube. The weight ratios of HA 1 : fusing agent and HA 2 : fusing agent for the example cubes, and of the control agent : fusing agent for the control cube were the same, and the weight ratio of the respective hydrophobic polymer : energy absorber was in accordance with the examples disclosed herein (e.g., 1:1-5:1).

After printing, the control agent was applied to the surface of the control cube, HA 1 was applied to the surface of the example cube 1, and HA 2 was applied to the surface of the example cube 2.

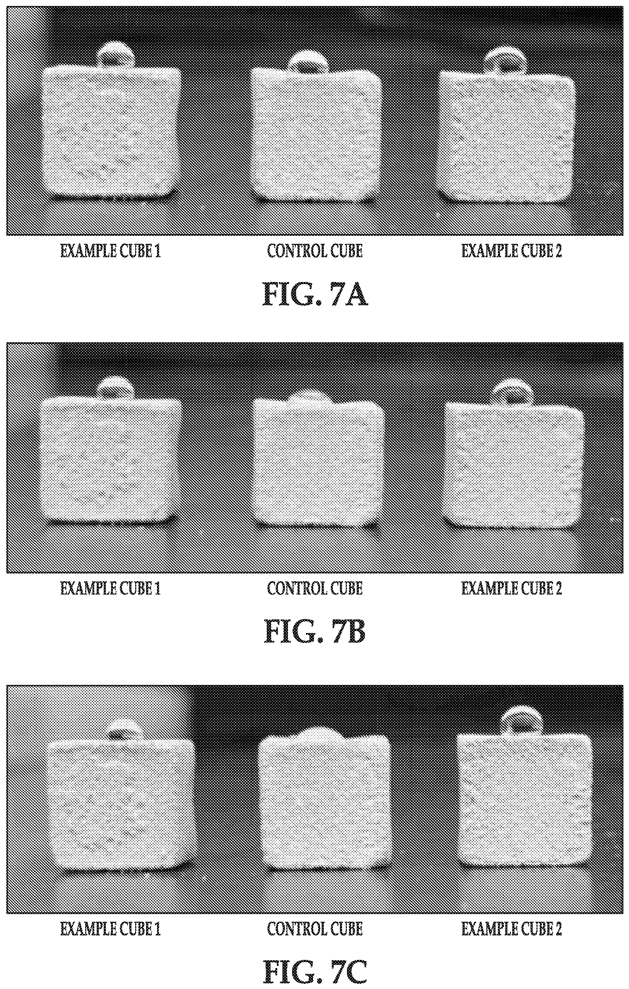

A drop of deionized water was deposited on each of the cubes to perform a qualitative contact angle measurement test. Pictures of the cubes were taken at T=0 (when the water droplets were deposited), at T=5 (5 minutes after the water droplets were deposited), and at T=10 (10 minutes after the water droplets were deposited). The T=0 picture is reproduced as Fig. 7A, the T=5 picture is reproduced as Fig. 7B, and the T=10 picture is reproduced as Fig. 7C. The control cube (no perfluoropolymer) is in the middle, example cube 1 (PTFE in HA 1) is on the left, and example cube 2 (PFA in HA 2) in on the right.

The contact angle was observed, as this indicates the wetting of a solid by a liquid. A high contact angle, greater than 90°, indicates poor spreading of the liquid on the surface and poor wetting.

As shown in Fig. 7A, from the moment the water droplet was dispensed, the contact angles were the highest for the example cubes. Example cube 1 (with HA 1) and example cube 2 (with HA 2) showed a contact angle greater than 90°, corresponding to expected results with a hydrophobic surface. With the control cube, the contact angle was closer to 90°. The results confirmed the effect of the fluoropolymers.

As shown in Fig. 7B and Fig. 7C, after five and ten minutes, the example cubes 1 and 2 did not show a significant change in contact angle. This illustrated that the hydrophobicity was a permanent, not transient, effect. The surface of the example cubes had been irreversibly changed in terms of the hydrophobic property. Surface wetting was observed with the control cube, as the contact angle fell well below 90°.

These experiments indicate that a relatively hydrophobic polymer can exhibit efficiently alter the hydrophobicity of a 3D object surface using the hydrophobic agent disclosed herein.

It is to be understood that the ranges provided herein include the stated range and any value or sub-range within the stated range, as if such values or sub-ranges were explicitly recited. For example, from about 1 wt% to about 20 wt% should be interpreted to include not only the explicitly recited limits of from about 1 wt% to about 20 wt%, but also to include individual values, such as about 1.5 wt%, about 14 wt%, about 7.75 wt%, about 19 wt%, etc., and sub-ranges, such as from about 1.25 wt% to about 10 wt%, from about 3.2 wt% to about 15.2 wt%, from about 3 wt% to about 8 wt%, etc.

As used herein, the term "about" is used to provide flexibility to a numerical range endpoint by providing that a given value may be "a little above" or "a little below" the endpoint. The degree of flexibility of this term can be dictated by the particular variable and would be within the knowledge of those skilled in the art to determine based on experience and the associated description herein. As an example, when "about" is utilized to describe a value, this is meant to encompass minor variations (up to +/- 10%) from the stated value.

Reference throughout the specification to "one example", "another example", "an example", and so forth, means that a particular element (e.g., feature, structure, and/or characteristic) described in connection with the example is included in at least one example described herein, and may or may not be present in other examples. In addition, it is to be understood that the described elements for any example may be combined in any suitable manner in the various examples unless the context clearly dictates otherwise.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

In describing and claiming the examples disclosed herein, the singular forms "a", "an", and "the" include plural referents unless the context clearly dictates otherwise.

While several examples have been described in detail, it is to be understood that the disclosed examples may be modified. Therefore, the foregoing description is to be considered non-limiting.

## Claims

1. A method for three-dimensional (3D) printing, comprising:
applying a polymeric build material to form a build material layer;
based on a 3D object model, selectively applying a fusing agent onto the build material layer, thereby forming a patterned portion; **characterised in that** the method further comprises
based on the 3D object model, selectively applying a hydrophobic agent onto at least a portion of the patterned portion, wherein the hydrophobic agent includes a perfluorinated polymer having a mean particle size ranging from about 50 nm to about 195 nm; and
exposing the build material layer to energy to selectively coalesce the patterned portion and form a 3D object layer having a hydrophobic portion.

2. The method as defined in claim 1 wherein the perfluorinated polymer is selected from the group consisting of a perfluoroalkoxy alkane, poly(tetrafluoroethylene), a perfluorinated polyether, fluorinated ethylene propylene, and combinations thereof.

3. The method as defined in claim 1 wherein a weight ratio of the perfluorinated polymer in the selectively applied hydrophobic agent to an energy absorber in the selectively applied fusing agent ranges from about 0.1 to about 5.

4. The method as defined in claim 1 wherein:
the 3D object layer having the hydrophobic portion is an outer layer of a 3D printed object;
the fusing agent is a primer fusing agent, wherein the primer fusing agent comprises an energy absorber having absorption at wavelengths ranging from 800 nm to 4000 nm and having transparency at wavelengths ranging from 400 nm to 780 nm; and
prior to forming the outer layer, the method further comprises forming a core of the 3D printed object by:
iteratively applying the polymeric build material to form respective build material layers;
selectively applying a core fusing agent on the respective build material layers to form respective patterned portions, wherein the core fusing agent comprises an energy absorber having absorption at least at wavelengths in the visible region ranging from 400 nm to 780 nm and may also absorb energy in the region ranging from 800 nm to 4000 nm; and
exposing the respective build material layers to energy;
wherein "absorption" means that at least 80% of radiation having wavelengths within the specified range is absorbed; and wherein "transparency" means that 25% or less of radiation having wavelengths within the specified range is absorbed.

5. The method as defined in claim 4 wherein prior to exposing the respective build material layers to energy, the method further comprises patterning hydrophobic edges by:
selectively applying the primer fusing agent on the respective build material layers to form individual patterned portions adjacent to the respective patterned portions; and
selectively applying the hydrophobic agent onto at least a portion of the individual patterned portions.

6. The method as defined in claim 4 wherein:
prior to forming the core of the 3D printed object, the method further comprises building a hydrophobic base by:
iteratively applying the polymeric build material to form individual build material layers;
selectively applying the primer fusing agent on the individual build material layers to form individual patterned portions;
selectively applying the hydrophobic agent onto at least a portion of the individual patterned portions; and
exposing the individual build material layers to energy; and
the core of the 3D printed object is built on the hydrophobic base.

7. The method as defined in claim 6, wherein the method further comprises patterning hydrophobic edges by:
selectively applying the primer fusing agent on the respective build material layers to form individual patterned portions adjacent to the respective patterned portions; and
selectively applying the hydrophobic agent onto at least a portion of the individual patterned portions; and
further comprises selectively applying the hydrophobic agent on the hydrophobic base, the hydrophobic portion, and the hydrophobic edges.

8. The method as defined in claim 1, further comprising:
repeating the applying of the polymeric build material, the selectively applying of the fusing agent, the selectively applying of the hydrophobic agent, and the exposing to form a predetermined number of 3D object layers and a 3D printed object, wherein the hydrophobic portion extends around an exterior of the 3D printed object; and
selectively applying the hydrophobic agent on the hydrophobic portion of the 3D printed object.

9. The method as defined in claim 1, further comprising selectively applying the hydrophobic agent on the hydrophobic portion of the 3D printed object.

10. A method of modifying surface hydrophobicity of a three-dimensional (3D) printed object, comprising:
iteratively applying individual build material layers of a polymeric build material;
based on a 3D object model, selectively applying a core fusing agent onto some of the individual build material layers, thereby forming patterned inner portions, wherein the core fusing agent comprises an energy absorber having absorption at least at wavelengths in the visible region ranging from 400 nm to 780 nm and may also absorb energy in the region ranging from 800 nm to 4000 nm;
selectively applying a primer fusing agent and a hydrophobic agent onto some of the individual build material layers at areas that are positioned at a 3D object perimeter according to the 3D object model, wherein:
the hydrophobic agent includes a perfluorinated polymer having a mean particle size ranging from about 50 nm to about 195 nm; and
the primer fusing agent comprises an energy absorber having absorption at wavelengths ranging from 800 nm to 4000 nm and having transparency at wavelengths ranging from 400 nm to 780 nm;
exposing the individual build material layers to energy to selectively coalesce the patterned portions and form the 3D printed object having at least one hydrophobic portion at its perimeter;
removing non-coalesced polymeric build material from the 3D printed object; and
selectively applying the hydrophobic agent on the at least one hydrophobic portion of the 3D printed object;
wherein "absorption" means that at least 80% of radiation having wavelengths within the specified range is absorbed; and wherein "transparency" means that 25% or less of radiation having wavelengths within the specified range is absorbed.

11. The method as defined in claim 10 wherein the perfluorinated polymer is selected from the group consisting of a perfluoroalkoxy alkane, poly(tetrafluoroethylene), a perfluorinated polyether, fluorinated ethylene propylene, and combinations thereof.

12. The method as defined in claim 10 wherein:
i) the primer fusing agent and the hydrophobic agent are selectively applied at edges of the patterned inner portions, and wherein the edges are adjacent to non-patterned polymeric build material; or
ii) the primer fusing agent and the hydrophobic agent are applied to an outermost plurality of the individual build material layers; or
iii) both i and ii.

13. A multi-fluid kit for use with the method of any preceding claim, the multi-fluid kit, comprising:
a hydrophobic agent including a perfluorinated polymer having a mean particle size ranging from about 50 nm to about 195 nm;
a core fusing agent including an energy absorber having absorption at wavelengths ranging from 400 nm to 4000 nm; and
a primer fusing agent including a plasmonic resonance absorber having absorption at wavelengths ranging from 800 nm to 4000 nm and having transparency at wavelengths ranging from 400 nm to 780 nm.

14. The multi-fluid kit as defined in claim 13 wherein the perfluorinated polymer is selected from the group consisting of a perfluoroalkoxy alkane, poly(tetrafluoroethylene), a perfluorinated polyether, fluorinated ethylene propylene, and combinations thereof.

15. The multi-fluid kit as defined in claim 13, further comprising a detailing agent.

## Patentansprüche

1. Verfahren zum dreidimensionalen (3D) Drucken, das Folgendes umfasst:
Aufbringen eines polymeren Aufbaumaterials, um eine Aufbaumaterialschicht auszubilden;
auf der Basis eines 3D-Objektmodells, selektives Aufbringen eines Schmelzmittels auf die Aufbaumaterialschicht, wodurch ein strukturierter Teil ausgebildet wird; **dadurch gekennzeichnet, dass** das Verfahren ferner Folgendes umfasst
auf der Basis des 3D-Objektmodells, selektives Aufbringen eines hydrophoben Mittels auf mindestens einen Teil des strukturierten Teils, wobei das hydrophobe Mittel ein perfluoriertes Polymer einschließt, das eine mittlere Partikelgröße, die von etwa 50 nm bis etwa 195 nm reicht, aufweist; und
Aussetzen der Aufbaumaterialschicht gegenüber einer Energie, um den strukturierten Teil selektiv zu verbinden und eine 3D-Objektschicht, die einen hydrophoben Teil aufweist, auszubilden.

2. Verfahren nach Anspruch 1, wobei das perfluorierte Polymer aus der Gruppe ausgewählt ist, die aus einem Perfluoralkoxyalkan, Poly(tetrafluorethylen), einem perfluorierten Polyether, fluoriertem Ethylenpropylen und Kombinationen davon besteht.

3. Verfahren nach Anspruch 1, wobei ein Gewichtsverhältnis des perfluorierten Polymers in dem selektiv aufgebrachten hydrophoben Mittel zu einem Energieabsorber in dem selektiv aufgebrachten Schmelzmittels von etwa 0,1 bis etwa 5 reicht.

4. Verfahren nach Anspruch 1, wobei:
die 3D-Objektschicht, die den hydrophoben Teil aufweist, eine Außenschicht eines 3D-gedruckten Objekts ist;
das Schmelzmittel ein Primer-Schmelzmittel ist, wobei das Primer-Schmelzmittel einen Energieabsorber umfasst, der eine Absorption bei Wellenlängen, die von 800 nm bis 4000 nm reichen, aufweist und eine Transparenz bei Wellenlängen, die von 400 nm bis 780 nm reichen, aufweist; und
vor einem Ausbilden der Außenschicht, das Verfahren ferner ein Ausbilden eines Kerns des 3D-gedruckten Objekts durch Folgendes umfasst:
iteratives Aufbringen des polymeren Aufbaumaterials, um jeweilige Aufbaumaterialschichten auszubilden;
selektives Aufbringen eines Kernschmelzmittels auf die jeweiligen Aufbaumaterialschichten, um jeweilige strukturierte Teile auszubilden, wobei das Kernschmelzmittel einen Energieabsorber umfasst, der eine Absorption mindestens bei Wellenlängen in der sichtbaren Region, die von 400 nm bis 780 nm reicht, aufweist und ebenso eine Energie in der Region, die von 800 nm bis 4000 nm reicht, absorbieren kann; und
Aussetzen der jeweiligen Aufbaumaterialschichten gegenüber einer Energie;
wobei "Absorption" bedeutet, dass mindestens 80 % einer Strahlung, die Wellenlängen innerhalb des angegebenen Bereichs aufweist, absorbiert werden; und wobei "Transparenz" bedeutet, dass 25 % oder weniger einer Strahlung, die Wellenlängen innerhalb des angegebenen Bereichs aufweist, absorbiert werden.

5. Verfahren nach Anspruch 4, wobei, vor einem Aussetzen der jeweiligen Aufbaumaterialschichten gegenüber einer Energie, das Verfahren ferner ein Strukturieren hydrophober Ränder durch Folgendes umfasst:
selektives Aufbringen des Primer-Schmelzmittels auf die jeweiligen Aufbaumaterialschichten, um einzelne strukturierte Teile angrenzend an die jeweiligen strukturierten Teile auszubilden; und
selektives Aufbringen des hydrophoben Mittels auf mindestens einen Teil der einzelnen strukturierten Teile.

6. Verfahren nach Anspruch 4, wobei:
vor einem Ausbilden des Kerns des 3D-gedruckten Objekts, das Verfahren ferner ein Aufbauen einer hydrophoben Basis durch Folgendes umfasst:
iteratives Aufbringen des polymeren Aufbaumaterials, um einzelne Aufbaumaterialschichten auszubilden;
selektives Aufbringen des Primer-Schmelzmittels auf die einzelnen Aufbaumaterialschichten, um einzelne strukturierte Teile auszubilden;
selektives Aufbringen des hydrophoben Mittels auf mindestens einen Teil der einzelnen strukturierten Teile; und
Aussetzen der einzelnen Aufbaumaterialschichten gegenüber einer Energie; und der Kern des 3D-gedruckten Objekts auf der hydrophoben Basis aufgebaut wird.

7. Verfahren nach Anspruch 6, wobei das Verfahren ferner ein Strukturieren hydrophober Ränder durch Folgendes umfasst:
selektives Aufbringen des Primer-Schmelzmittels auf die jeweiligen Aufbaumaterialschichten, um einzelne strukturierte Teile angrenzend an die jeweiligen strukturierten Teile auszubilden; und
selektives Aufbringen des hydrophoben Mittels auf mindestens einen Teil der einzelnen strukturierten Teile; und
ferner ein selektives Aufbringen des hydrophoben Mittels auf die hydrophobe Basis, den hydrophoben Teil und die hydrophoben Ränder umfasst.

8. Verfahren nach Anspruch 1, das ferner Folgendes umfasst:
Wiederholen des Aufbringens des polymeren Aufbaumaterials, des selektiven Aufbringens des Schmelzmittels, des selektiven Aufbringens des hydrophoben Mittels und des Aussetzens umfasst, um eine zuvor bestimmte Anzahl von 3D-Objektschichten und ein 3D-gedrucktes Objekt auszubilden, wobei sich der hydrophobe Teil um eine Außenseite des 3D-gedruckten Objekts herum erstreckt; und
selektives Aufbringen des hydrophoben Mittels auf den hydrophoben Teil des 3D-gedruckten Objekts.

9. Verfahren nach Anspruch 1, das ferner ein selektives Aufbringen des hydrophoben Mittels auf den hydrophoben Teil des 3D-gedruckten Objekts umfasst.

10. Verfahren zum Modifizieren einer Oberflächenhydrophobie eines dreidimensional (3D) gedruckten Objekts, das Folgendes umfasst:
iteratives Aufbringen einzelner Aufbaumaterialschichten eines polymeren Aufbaumaterials;
auf der Basis eines 3D-Objektmodells, selektives Aufbringen eines Kernschmelzmittels auf einige der einzelnen Aufbaumaterialschichten, wodurch strukturierte innere Teile ausgebildet werden, wobei das Kernschmelzmittel einen Energieabsorber umfasst, der eine Absorption mindestens bei Wellenlängen in der sichtbaren Region, die von 400 nm bis 780 nm reicht, aufweist und ebenso eine Energie in der Region, die von 800 nm bis 4000 nm reicht, absorbieren kann;
selektives Aufbringen eines Primer-Schmelzmittels und eines hydrophoben Mittels auf einige der einzelnen Aufbaumaterialschichten an Flächen, die gemäß dem 3D-Objektmodell an einem 3D-Objektumfang positioniert sind, wobei:
das hydrophobe Mittel ein perfluoriertes Polymer einschließt, das eine mittlere Partikelgröße, die von etwa 50 nm bis etwa 195 nm reicht, aufweist; und
das Primer-Schmelzmittel einen Energieabsorber umfasst, der eine Absorption bei Wellenlängen, die von 800 nm bis 4000 nm reichen, aufweist und eine Transparenz bei Wellenlängen, die von 400 nm bis 780 nm reichen, aufweist; Aussetzen der einzelnen Aufbaumaterialschichten gegenüber einer Energie, um die struktuierten Teile selektiv zu verbinden und das 3D-gedruckte Objekt, das mindestens einen hydrophoben Teil an seinem Umfang aufweist, auszubilden;
Entfernen von nicht verbundenem polymerem Aufbaumaterial von dem 3D-gedruckten Objekt; und
selektives Aufbringen des hydrophoben Mittels auf den mindestens einen hydrophoben Teil des 3D-gedruckten Objekts;
wobei "Absorption" bedeutet, dass mindestens 80 % einer Strahlung, die Wellenlängen innerhalb des angegebenen Bereichs aufweist, absorbiert werden; und wobei "Transparenz" bedeutet, dass 25 % oder weniger einer Strahlung, die Wellenlängen innerhalb des angegebenen Bereichs aufweist, absorbiert werden.

11. Verfahren nach Anspruch 10, wobei das perfluorierte Polymer aus der Gruppe ausgewählt ist, die aus einem Perfluoralkoxyalkan, Poly(tetrafluorethylen), einem perfluorierten Polyether, fluoriertem Ethylenpropylen und Kombinationen davon besteht.

12. Verfahren nach Anspruch 10, wobei:
i) das Primer-Schmelzmittel und das hydrophobe Mittel an Rändern der strukturierten inneren Teile selektiv aufgebracht werden, wobei die Ränder an nicht strukturiertes polymeres Aufbaumaterial angrenzen; oder
ii) das Primer-Schmelzmittel und das hydrophobe Mittel auf eine äußerste Vielzahl der einzelnen Aufbaumaterialschichten aufgebracht werden; oder
iii) sowohl i als auch ii.

13. Multifluid-Kit zur Verwendung mit dem Verfahren nach einem der vorstehenden Ansprüche, wobei das Multifluid-Kit Folgendes umfasst:
ein hydrophobes Mittel, das ein perfluoriertes Polymer einschließt, das eine mittlere Partikelgröße, die von etwa 50 nm bis etwa 195 nm reicht, aufweist;
ein Kernschmelzmittel, das einen Energieabsorber einschließt, der eine Absorption bei Wellenlängen, die von 400 nm bis 4000 nm reichen, aufweist; und
ein Primer-Schmelzmittel, das einen plasmonischen Resonanzabsorber einschließt, der eine Absorption bei Wellenlängen, die von 800 nm bis 4000 nm reichen, aufweist und eine Transparenz bei Wellenlängen, die von 400 nm bis 780 nm reichen, aufweist.

14. Multifluid-Kit nach Anspruch 13, wobei das perfluorierte Polymer aus der Gruppe ausgewählt ist, die aus einem Perfluoralkoxyalkan, Poly(tetrafluorethylen), einem perfluorierten Polyether, fluoriertem Ethylenpropylen und Kombinationen davon besteht.

15. Multifluid-Kit nach Anspruch 13, das ferner ein Detaillierungsmittel umfasst.

## Revendications

1. Procédé d'impression tridimensionnelle (3D), comprenant :
l'application d'un matériau de construction polymère afin de former une couche de matériau de construction ;
sur la base d'un modèle d'objet 3D, l'application sélective d'un agent de fusion sur la couche de matériau de construction, formant ainsi une partie à motif ; **caractérisé en ce que** le procédé comprend en outre
sur la base du modèle d'objet 3D, l'application sélective d'un agent hydrophobe sur au moins une partie de la partie à motif, dans lequel l'agent hydrophobe comporte un polymère perfluoré ayant une taille moyenne de particules allant d'environ 50 nm à environ 195 nm ; et
l'exposition de la couche de matériau de construction à une énergie afin de fusionner sélectivement la partie à motif et de former une couche d'objet 3D ayant une partie hydrophobe.

2. Procédé selon la revendication 1, dans lequel le polymère perfluoré est sélectionné dans le groupe constitué d'un alcane perfluoroalkoxy, d'un poly(tétrafluoroéthylène), d'un polyéther perfluoré, d'un éthylène-propylène fluoré, et des combinaisons de ceux-ci.

3. Procédé selon la revendication 1, dans lequel un rapport de poids du polymère perfluoré dans l'agent hydrophobe appliqué sélectivement à un absorbeur d'énergie dans l'agent de fusion appliqué sélectivement est compris dans une plage allant d'environ 0,1 à environ 5.

4. Procédé selon la revendication 1, dans lequel :
la couche d'objet 3D ayant la partie hydrophobe est une couche externe d'un objet imprimé en 3D ;
l'agent de fusion est un agent de fusion d'apprêt, dans lequel l'agent de fusion d'apprêt comprend un absorbeur d'énergie ayant une absorption à des longueurs d'onde allant de 800 nm à 4 000 nm et ayant une transparence à des longueurs d'onde allant de 400 nm à 780 nm ; et
avant de former la couche externe, le procédé comprend en outre la formation d'une âme de l'objet imprimé en 3D par :
application itérative du matériau de construction polymère afin de former des couches de matériau de construction respectives ;
application sélective d'un agent de fusion d'âme sur les couches de matériau de construction respectives afin de former des parties à motif respectives, dans lequel l'agent de fusion d'âme comprend un absorbeur d'énergie ayant une absorption au moins à des longueurs d'onde dans la région visible allant de 400 nm à 780 nm et peut également absorber une énergie dans la région allant de 800 nm à 4 000 nm ; et
exposition de couches de matériau de construction respectives à une énergie ;
dans lequel l'« absorption » signifie qu'au moins 80 % d'un rayonnement ayant des longueurs d'onde à l'intérieur de la plage spécifiée est absorbé ; et dans lequel l'« transparence » signifie que 25 % ou moins d'un rayonnement ayant des longueurs d'onde à l'intérieur de la plage spécifiée est absorbé.

5. Procédé selon la revendication 4, dans lequel, avant d'exposer les couches de matériau de construction respectives à une énergie, le procédé comprend en outre le modelage de bords hydrophobes par :
application sélective de l'agent de fusion d'apprêt sur les couches de matériau de construction respectives afin de former des parties à motif individuelles adjacentes aux parties à motif respectives ; et
application sélective de l'agent hydrophobe sur au moins une partie des parties à motif individuelles.

6. Procédé selon la revendication 4, dans lequel :
avant de former l'âme de l'objet imprimé en 3D, le procédé comprend en outre la construction d'une base hydrophobe par :
application sélective du matériau de construction polymère afin de former des couches de matériau de construction individuelles ;
application sélective de l'agent de fusion d'apprêt sur les couches de matériau de construction individuelles afin de former des parties à motif individuelles ;
application sélective de l'agent hydrophobe sur au moins une partie des parties à motif individuelles ; et
exposition des couches de matériau de construction individuelles à une énergie ; et l'âme de l'objet imprimé en 3D est construit sur la base hydrophobe.

7. Procédé selon la revendication 6, dans lequel le procédé comprend en outre le modelage de bords hydrophobes par :
application sélective de l'agent de fusion d'apprêt sur les couches de matériau de construction respectives afin de former des parties à motif individuelles adjacentes aux parties à motif respectives ; et
application sélective de l'agent hydrophobe sur au moins une partie des parties à motif individuelles ; et
comprend en outre l'application sélective de l'agent hydrophobe sur la base hydrophobe, la partie hydrophobe, et les bords hydrophobes.

8. Procédé selon la revendication 1, comprenant en outre :
la répétition de l'application du matériau de construction polymère, de l'application sélective de l'agent de fusion, de l'application sélective de l'agent hydrophobe, et de l'exposition afin de former un nombre prédéterminé de couches d'objet 3D et un objet imprimé en 3D, dans lequel la partie hydrophobe s'étend autour d'un extérieur de l'objet imprimé en 3D ; et
l'application sélective de l'agent hydrophobe sur la partie hydrophobe de l'objet imprimé en 3D.

9. Procédé selon la revendication 1, comprenant en outre l'application sélective de l'agent hydrophobe sur la partie hydrophobe de l'objet imprimé en 3D.

10. Procédé de modification d'une hydrophobicité de surface d'un objet imprimé en trois dimensions (3D), comprenant :
l'application itérative de couches de matériau de construction individuelles d'un matériau de construction polymère ;
sur la base d'un modèle d'objet en 3D, l'application sélective d'un agent de fusion d'âme sur certaines des couches de matériau de construction individuelles, formant ainsi des parties internes à motif, dans lequel l'agent de fusion d'âme comprend un absorbeur d'énergie ayant une absorption au moins à des longueurs d'onde dans la région visible allant de 400 nm à 780 nm et peut également absorber une énergie dans la région allant de 800 nm à 4000 nm ;
l'application sélective d'un agent de fusion d'apprêt et d'un agent hydrophobe sur certaines des couches de matériau de construction individuelles dans des zones qui sont positionnées au niveau d'un périmètre d'objet 3D selon le modèle d'objet 3D, dans lequel :
l'agent hydrophobe comporte un polymère perfluoré ayant une taille moyenne de particules allant d'environ 50 nm à environ 195 nm ; et
l'agent de fusion d'apprêt comprend un absorbeur d'énergie ayant une absorption à des longueurs d'onde allant de 800 nm à 4000 nm et ayant une transparence à des longueurs d'onde allant de 400 nm à 780 nm ; l'exposition des couches de matériau de construction individuelles à une énergie afin de fusionner sélectivement les parties à motif et de former un objet imprimé en 3D ayant au moins une partie hydrophobe au niveau de son périmètre ;
l'élimination d'un matériau de construction polymère non fusionné à partir de l'objet imprimé en 3D ; et
l'application sélective de l'agent hydrophobe sur l'au moins une partie hydrophobe de l'objet imprimé en 3D ;
dans lequel l'« absorption » signifie qu'au moins 80 % d'un rayonnement ayant des longueurs d'onde à l'intérieur de la plage spécifiée est absorbé ; et dans lequel l'« transparence » signifie que 25 % ou moins d'un rayonnement ayant des longueurs d'onde à l'intérieur de la plage spécifiée est absorbé.

11. Procédé selon la revendication 10, dans lequel le polymère perfluoré est sélectionné dans le groupe constitué d'un alcane perfluoroalkoxy, d'un poly(tétrafluoroéthylène), d'un polyéther perfluoré, d'un éthylène-propylène fluoré, et des combinaisons de ceux-ci.

12. Procédé selon la revendication 10, dans lequel :
i) l'agent de fusion d'apprêt et l'agent hydrophobe sont appliqués sélectivement au niveau de bords des parties internes à motif, et dans lequel les bords sont adjacents à un matériau de construction polymère sans motif ; ou
ii) l'agent de fusion d'apprêt et l'agent hydrophobe sont appliqués à une pluralité la plus externe de couches de matériau de construction individuelles ; ou
iii) à la fois i et ii.

13. Kit multi-fluide pour une utilisation avec le procédé selon l'une quelconque revendication précédente, le kit multi-fluide, comprenant :
un agent hydrophobe comportant un polymère perfluoré ayant une taille moyenne de particules allant d'environ 50 nm à environ 195 nm ;
un agent de fusion d'âme comportant un absorbeur d'énergie ayant une absorption à des longueurs d'onde allant de 400 nm à 4 000 nm ; et
et un agent de fusion d'apprêt comportant un absorbeur de résonance plasmonique ayant une absorption à des longueurs d'onde allant de 800 nm à 4000 nm et ayant une transparence à des longueurs d'onde allant de 400 nm à 780 nm.

14. Kit multi-fluide selon la revendication 13, dans lequel le polymère perfluoré est sélectionné dans le groupe constitué d'un alcane perfluoroalkoxy, d'un poly(tétrafluoroéthylène), d'un polyéther perfluoré, d'un éthylène-propylène fluoré, et des combinaisons de ceux-ci.

15. Kit multi-fluide selon la revendication 13, comprenant en outre un agent détaillant.
